(19) Europäisches Patentamt
European Patent Office
Office européen des brevets

(11) EP 3 333 834 A1

(12) **EUROPEAN PATENT APPLICATION**
published in accordance with Art. 153(4) EPC

(43) Date of publication:
**13.06.2018 Bulletin 2018/24**

(51) Int Cl.:
*G09F 3/03* (2006.01)     *B31D 1/02* (2006.01)

(21) Application number: **16832820.1**

(22) Date of filing: **25.07.2016**

(86) International application number:
**PCT/JP2016/071686**

(87) International publication number:
**WO 2017/022541 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.08.2015 JP 2015153964**

(71) Applicant: Yupo Corporation
**Tokyo 101-0062 (JP)**

(72) Inventors:
• IWASAWA Yuta
**Kamisu-shi**
**Ibaraki 314-0102 (JP)**
• ZAMA Takahiro
**Kamisu-shi**
**Ibaraki 314-0102 (JP)**
• KITAMURA Kazuhisa
**Tokyo 101-0062 (JP)**

(74) Representative: **Zimmermann & Partner**
**Patentanwälte mbB**
**Postfach 330 920**
**80069 München (DE)**

(54) **EASY-TO-PEEL LAYERED LABEL, PRODUCTION PROCESS THEREFOR, USE METHOD THEREFOR, ADHEREND WITH EASY-TO-PEEL LAYERED LABEL, AND METHOD FOR JUDGING OPENING**

(57) Th present invention provides an easily peelable laminate label including a base layer A, a brittle layer B, a visually recognizable layer C, an inhibition layer D, and a pressure-sensitive adhesive layer E; the brittle layer B, the visually recognizable layer C, and the inhibition layer D being laminated in this order between the base layer A and the pressure-sensitive adhesive layer E; the brittle layer B and the visually recognizable layer C being in contact with each other; the visually recognizable layer C and the inhibition layer D being in contact with each other; the inhibition layer D being disposed in a discontinuous pattern; and a form of failure when the easily peelable laminate label is subjected to 180° peeling being delamination and/or adhesive failure at an interface between the inhibition layer D and the layer in contact with the inhibition layer D in a portion where the inhibition layer D is provided and cohesive failure of the brittle layer B in a portion where the inhibition layer D is not provided.

Fig. 2

**Description**

Technical Field

The present invention relates to an easily peelable laminate label, a production method and usage method thereof, an adherend with an easily peelable laminate label, and an opening determination method. More particularly, the present invention relates to a label in which, when the label is peeled after being attached to an adherend, a pattern indicating that the label has been peeled appears clearly so that the matter of whether the label has been peeled from the adherend can be determined by the naked eye using the pattern as an indicator, and which is difficult to restore the peeled label to the state prior to the appearance of the pattern.

Background Art

When storing goods in a packaging container for transportation, sale, or the like, a label, which is configured so that a mark such as "OPENED" or "VOID" remains on the packaging container when the label is peeled after being attached to an openable location of the packaging container, is typically used for the purpose of preventing the removal, replacement, contamination, or the like of the contents inside the packaging container. With such a label, there is a demand for the mark to appear clearly when the label is peeled, and there is also a demand for a function in which, once the label has been peeled, the mark indicating that the label has been peeled remains even if the label is reattached to the original location using a pressure-sensitive adhesive or an adhesive agent so that the opening of the packaging container can be reliably ascertained.

Several methods have been disclosed as techniques in which a prescribed pattern appears when a label has been peeled.

For example, Patent Document 1 discloses an adhesive tape in which a thin film layer is provided on one side of a transparent support, and a printing layer having a pattern is provided so that a portion thereof overlaps with the thin film layer, wherein the entire surface is further covered by an adhesive layer. This adhesive tape is designed so that the thin film layer and the printing layer can be peeled from one another, and when the adhesive tape is peeled, the printing layer and the adhesive layer are transferred to the adherend. Such a tape has the advantage that a distinct pattern can be left behind on the adherend side. However, since the printing layer does not completely cover the adhesive layer on the adherend side, there is a drawback that the adhesive layer is partially exposed, which causes stickiness or contamination.

Patent Document 2 discloses a reattachment and illegal use preventing label including a peeling layer formed on the entire surface or with a pattern on the underside of a label substrate, a printing label formed on the underside of the label substrate or the peeling layer, and a pressure-sensitive adhesive layer formed on the underside of the printing layer (Embodiment 1). Patent Document 2 also discloses a reattachment and illegal use preventing label including a peeling layer formed in a pattern on a portion of the underside of a label substrate, a printing layer formed on the underside of the label substrate or the peeling layer, a pressure-sensitive adhesive layer formed on the underside of the printing layer, and another peeling layer formed in a pattern on a portion of the underside of the pressure-sensitive adhesive layer, wherein the peeling layer and the other peeling layer are disposed at mutually complementary positions without overlapping vertically (Embodiment 2). When these reattachment and illegal use preventing labels are peeled, the printing layer is cut in the thickness direction of the label starting at the end of the peeling layer so that the printing layer in the region corresponding to the peeling layer (peeling layer formed on the underside of the label) remains on the adherend and the printing layer in other regions is separated from the adherend together with the substrate. Therefore, in addition to being able to leave behind a distinct pattern on both the substrate side and the adherend side after peeling, there is also the advantage that there is no stickiness because the peeling layer covers the top of the pressure-sensitive adhesive layer transferred to the adherend side. However, the peeling mechanism of this reattachment and illegal use preventing label is a mechanism for enabling interfacial peeling at the interface between the substrate and the peeling layer and the interface between the adherend and the pressure-sensitive adhesive layer (in the case of Embodiment 2, the interface between the adherend and the other peeling layer). The substrate side surface and the adherend side surface can be easily attached with a pressure-sensitive adhesive or an adhesive agent and can be easily restored to the original state after being peeled, which leads to a drawback that the security is not very high.

Patent Document 3 discloses an adhesive sheet having a structure in which a pressure-sensitive adhesive layer is laminated on one side of a base layer, wherein the base layer includes a base layer support and a plurality of peeling layers formed on the entire surface or a portion of one side of the base layer support, and the adhesion of a portion of the surface of the pressure-sensitive adhesive layer is inhibited. This adhesive sheet is of a type configured so that when the adhesive sheet is peeled, peeling occurs between the peeling layer and the base layer support in regions other than the region where the adhesion inhibiting part is formed, which causes a pattern to appear on the base layer side, and a mark is not left behind on the adherend side. Therefore, the matter of whether the adhesive sheet has been peeled from the adherend cannot be determined from the adherend from which the adhesive sheet has been peeled. Patent Document 4 discloses a transparent adhesive seal for anti-counterfeiting, wherein a brittle layer and an adhesive layer are provided in this order on one side of a transparent film substrate, and a pattern layer for anti-counterfeiting is provided on the brittle layer. With this transparent adhesive seal for anti-counterfeiting, the pattern for anti-counterfeiting provided on the brittle layer is warped or displaced so that the shape of the pattern fails when the seal has been peeled, which enables the confirmation of the fact that the seal has been peeled. Accordingly, the mark of the pattern remaining on both the substrate side and the adherend side after peeling is unclear, which leads to the drawback that it is difficult to provide the mark with some kind of information or to leave the mark behind with a specific shape.

Patent Document 5 discloses an illegal use preventing body including an authenticity determination layer formed on a base layer and containing a cholesteric liquid crystal, and an adhesive layer having a pattern. This illegal use preventing body is configured so that when the illegal use preventing body is peeled, the cholesteric liquid crystal phase in the region corresponding to the adhesive layer fails, and a prescribed pattern which does not change color due to the liquid crystal is displayed on the substrate side. Since the cholesteric liquid crystal phase cannot be restored once it has failed, there is the advantage that a peeled label cannot be restored to the state prior to the appearance of the prescribed pattern. However, since the display of the pattern is determined by the presence or absence of a change in color due to the cholesteric liquid crystal, there is a drawback that the display is not as clear as a display determined by the presence or absence of a coloring agent, for example.

Citation List

Patent Literature

  Patent Document 1: JP 52-106466 Y
  Patent Document 2: JP 2002-072889 A
  Patent Document 3: JP 2007-178558 A
  Patent Document 4: JP 10-222075 A
  Patent Document 5: JP 2002-205472 A

Summary of Invention

Technical Problem

As described above, labels with various configurations have been proposed in the past as labels in which a mark indicating that the label has been peeled is left behind. However, these labels have problems in that the pattern of the mark is unclear or is easily restored even after being peeled, and in actuality, the matter of whether the label has been peeled from the adherend cannot be easily and reliably determined.

Therefore, to solve the problems of these conventional technologies, the present inventors have advanced research with the objective of providing an easily peelable laminate label with which, when the label is peeled after the label has been attached to an adherend, a mark pattern visually recognizable to the naked eye appears clearly at the site of the adherend from which the label has been peeled, and it is difficult to restore the site from which the label has been peeled to the state prior to the appearance of the mark pattern. In addition, the present inventors advanced research with the objective of providing a production method and usage method for such an easily peelable laminate label, an adhered with an easily peelable laminate label to which such an easily peelable laminate label is attached, and an opening determination method for the adherend. Solution to Problem

As a result of conducting dedicated research in order to solve the problems described above, the present inventors discovered that by arranging a brittle layer B, a visually recognizable layer C, and an inhibition layer D provided with a discontinuous pattern in this order between a base layer A and a pressure-sensitive adhesive layer E so that, when the label is peeled, an interface between the inhibition layer D and the layer in contact with the inhibition layer D is subjected to delamination (DF) and/or adhesive failure (AF) in regions where the inhibition layer D is formed, and the brittle layer B is subjected to cohesive failure (CSF) in regions where the inhibition layer D is not formed, an easily peelable laminate label is obtained, wherein when the label is peeled after being attached to an adherend, a visually recognizable mark pattern appears clearly at the site of the adherend from which the label has been peeled, and it is difficult to restore the site from which the label has been peeled to the state prior to the appearance of the mark pattern. Specifically, the present invention has the following structure. A first aspect of the present invention is an easily peelable laminate label including a base layer A, a brittle layer B, a visually recognizable layer C, an inhibition layer D, and a pressure-sensitive adhesive layer E; the brittle layer B, the visually recognizable layer C, and the inhibition layer D being laminated in this order between the base layer A and the pressure-sensitive adhesive layer E; the brittle layer B and the visually recognizable layer C being in contact with each other; the visually recognizable layer C and the inhibition layer D being in contact with each other; the inhibition layer D being disposed in a discontinuous pattern; and a form of failure according to JIS K6866:1999 when the easily peelable laminate label is subjected to 180° peeling in accordance with JIS K6854-2:1999 being delamination (DF) and/or adhesive failure (AF) at an interface between the inhibition layer D and the layer in contact with the inhibition layer D in a portion where the inhibition layer D is provided and cohesive failure (CSF) of the brittle layer B in a portion where the inhibition layer D is not provided.

A second aspect of the present invention is a production method for an easily peelable laminate film, the method including producing an easily peelable laminate film by laminating a base layer A and a brittle layer B; providing a visually recognizable layer C on a brittle layer B side surface of the easily peelable laminate film; laminating the visually recognizable layer C and an inhibition layer D such that both are in contact with each other; and laminating the inhibition layer D and a pressure-sensitive adhesive layer E such that both are in contact with each other.

A third aspect of the present invention is a production method for an easily peelable laminate film, the method including providing an inhibition layer D on a surface of a base layer A; laminating the inhibition layer D and a visually recognizable layer C such that both are in contact with each other; laminating the visually recognizable layer C and a brittle layer B such that both are in contact with each other; and laminating the brittle layer B and a pressure-sensitive adhesive layer E such that both are in contact with each other.

A fourth aspect of the present invention is an adherend with an easily peelable laminate label including an adherend and an easily peelable laminate label attached to at least a portion of a surface of the adherend; the easily peelable laminate label being the easily peelable laminate label of the present invention.

A fifth aspect of the present invention is a usage method for an easily peelable laminate label, the method including using the easily peelable laminate label of the present invention such that, when the label is peeled after being attached to an adherend, one or more patterns from among designs, characters, symbols, dots, geometric patterns, and random patterns appear in a portion from which the label is peeled from the adherend, and an inverted pattern of the pattern simultaneously appears in a portion remaining on the adherend. A sixth aspect of the present invention is a usage method for an easily peelable laminate label, the method including using the easily peelable laminate label of the present invention such that, when the label is peeled after being attached to an adherend, a form of failure according to JIS K6866:1999 is delamination (DF) and/or adhesive failure (AF) at an interface between an inhibition layer D and a layer in contact with the inhibition layer D in a portion where the inhibition layer D is provided and cohesive failure (CSF) of the brittle layer B in a portion where the inhibition layer D is not provided.

A seventh aspect of the present invention is a usage method for an easily peelable laminate label, the method including using the easily peelable laminate label of the present invention such that, when the easily peelable laminate label of the present invention is peeled from an adherend to which the easily peelable laminate label is attached, and a portion peeled from the adherend is reattached to a site of the adherend from which the label has been peeled by a pressure-sensitive adhesive or an adhesive agent, at least one type of pattern selected from designs, characters, symbols, dots, geometric patterns, and random patterns appears on the adherend side.

An eighth aspect of the present invention is an opening determination method including attaching the easily peelable laminate label of the present invention to an openable location of an adherend, assessing as "unopened" a state in which a pattern does not appear on a base layer A side of the easily peelable laminate label, and assessing as "opened" a state in which at least one type of pattern selected from designs, characters, symbols, dots, geometric patterns, and random patterns appears on the base layer A side. Advantageous Effects of Invention

When the easily peelable laminate label of the present invention is peeled after being attached to an adherend, a portion of the label is peeled from the adherend while other portions remain on the adherend side, and a mark pattern visually recognizable to the naked eye appears clearly in the remaining portions. By using this pattern as an indicator showing that the label has been peeled, the matter of whether the label has been peeled from the adherend can be easily determined. In addition, some portions remaining on the adherend form a rough surface so that even if an attempt is made to restore the label by reattaching the peeled portion, the peeled portion is difficult to reattach. Therefore, once this easily peelable laminate label is peeled, it is difficult to restore to the state prior to the appearance of the mark pattern, which has the effect that it is difficult to conceal the fact that the label has been peeled.

According to the production method for the easily peelable laminate label of the present invention, the easily peelable laminate label as described above can be produced with a simple process while suppressing cost.

In addition, in the adherend with an easily peelable laminate label of the present invention, the easily peelable laminate label as described above is attached. Thus, when the attachment location is an openable location, for example, the label is peeled and a mark pattern appears due to opening. This enables the mark pattern to be used as an indicator showing that the adherend has been opened. As a result, the matter of whether the adherend has been opened can be easily determined with the naked eye.

Because the usage method and opening determination method of the easily peelable laminate label of the present invention use the easily peelable laminate label described above, the mark pattern can be used as an indicator showing that the label has been peeled or that the adherend has been opened. This yields the advantage that anyone can clearly determine whether the label has been peeled from the adherend and whether the adherend has been opened.

Brief Description of Drawings

FIG. 1 is a schematic cross-sectional view illustrating an easily peelable laminate label of the first aspect of the present invention.
FIG. 2 is a schematic cross-sectional view illustrating a state in which the easily peelable laminate label illustrated in FIG. 1 is peeled after being attached to an adherend.
FIG. 3 is a schematic cross-sectional view illustrating an easily peelable laminate label of the second aspect of the present invention.
FIG. 4 is a schematic cross-sectional view illustrating a state in which the easily peelable laminate label illustrated in FIG. 3 is peeled after being attached to an adherend.
FIG. 5 is a schematic cross-sectional view illustrating an easily peelable laminate label in which the position of the inhibition layer differs from that of the present invention.
FIG. 6 is a schematic cross-sectional view illustrating a state in which the easily peelable laminate label illustrated in FIG. 5 is peeled after being attached to an adherend.

Description of Embodiments

The present invention will be described in detail hereinafter. The descriptions of constituent elements given below are based on typical embodiments of the present invention, but the present invention is not limited to such embodiments.
In the present specification, the numeric ranges expressed using "to" indicate ranges that include the numeric values written before and after the "to" as the lower and upper limit values, respectively.
When the terms "main component" and "major" are used in the present invention, a main component of copolymerization refers to the component used in the largest molar amount among the copolymerization monomers; a main component of a composition refers to the material used in the largest mass among compounded materials; and a major thermoplastic resin refers to the thermoplastic resin used in the largest mass among compounded thermoplastic resins.

Easily peelable laminate label

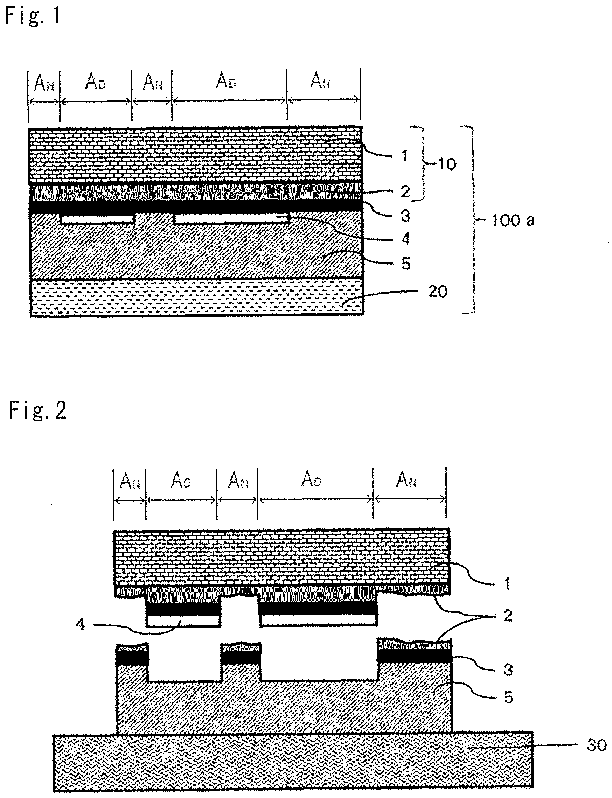

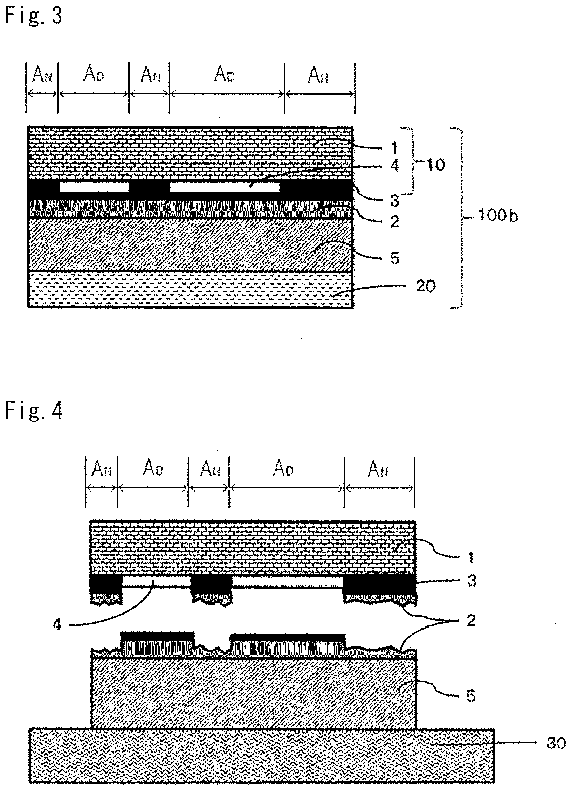

The easily peelable laminate label of the present invention is an easily peelable laminate label including a base layer A, a brittle layer B, a visually recognizable layer C, an inhibition layer D, and a pressure-sensitive adhesive layer E, wherein the brittle layer B, the visually recognizable layer C, and the inhibition layer D are laminated in this order between the base layer A and the pressure-sensitive adhesive layer E; the brittle layer B and the visually recognizable layer C are in contact with each other; the visually recognizable layer C and the inhibition layer D are in contact with each other; and the inhibition layer D is disposed in a discontinuous pattern.
In the present invention, either the base layer A or the pressure-sensitive adhesive layer E may be on the brittle layer B side or the inhibition layer D side. That is, the easily peelable laminate label of the present invention may be an aspect in which the base layer A, the brittle layer B, the visually recognizable layer C, the inhibition layer D, and the pressure-sensitive adhesive layer E are laminated in this order (first aspect), or an aspect in which the base layer A, the inhibition layer D, the visually recognizable layer C, the brittle layer B, and the pressure-sensitive adhesive layer E are laminated in this order (second aspect). One example of the first aspect is a label having the configuration illustrated in FIG. 1, and an example of the second aspect is a label having the configuration illustrated in FIG. 3. In FIGS. 1 and 3, 1 is a base layer A, 2 is a brittle layer B, 3 is a visually recognizable layer C, 4 is an inhibition layer D, 5 is a pressure-sensitive adhesive layer E, 20 is a release liner, and 100a and 100b are easily peelable laminate films. The respective configurations of the first and second aspects will be described in detail below.
In the present invention, the "inhibition layer D" being disposed in "a discontinuous pattern" means that in a perspective view of the easily peelable laminate film from a direction orthogonal to the surface, the inhibition layer D is provided so that there are both regions where the inhibition layer D is provided and regions where the inhibition layer D is not provided. Therefore, when there are regions where such an inhibition layer D is not provided, the inhibition layer D itself may be one continuous film (continuous film provided on a portion of the installation surface) or may be a collection of a plurality of films.
In the following explanations, a region where the inhibition layer D is provided may be called an "inhibition layer formation region $A_D$" or a "portion where the inhibition layer D is provided", and a region where the inhibition layer D is not provided may be called an "inhibition layer non-formation region $A_N$" or a "portion where the inhibition layer D is not provided".

The pattern (shape in a plan view) of the inhibition layer D or an inverted pattern thereof corresponds to the mark pattern appearing on the adherend side when the easily peelable laminate label attached to the adherend is peeled. Therefore, the pattern of the inhibition layer D preferably has a shape or dimensions which can be easily observed visually. The specific pattern of the inhibition layer D will be described below.

The easily peelable laminate film of the present invention is also characterized in that the form of failure according to JIS K6866:1999 when the easily peelable laminate label attached to an adherend is subjected to 180° peeling in accordance with JIS K6854-2:1999 is delamination (DF) and/or adhesive failure (AF) at an interface between an inhibition layer D and a layer in contact with the inhibition layer D in a portion where the inhibition layer D is provided (inhibition layer formation region $A_D$) and cohesive failure (CSF) of the brittle layer B in a portion where the inhibition layer D is not provided (inhibition layer non-formation region $A_N$).

In both the first and second aspects described below, the adherend needs to be selected as an adherend in which the adhesive force between the adherend and the pressure-sensitive adhesive layer E is stronger than the average peel force of the brittle layer B and the adhesive strength between the inhibition layer D and the layer in contact with the inhibition layer D, and there is no adhesive failure (AF) at the interface between the pressure-sensitive adhesive layer E and the adherend when the easily peelable laminate label is peeled. For example, a PET film, a PVC film, an acrylic resin film, a polystyrene film, a glass sheet, an aluminum sheet, or the like may be used.

Here, the layer in contact with the inhibition layer D is at least the visually recognizable layer C, and, in the case of the first aspect, the pressure-sensitive adhesive layer E further corresponds to a layer in contact with the inhibition layer D. However, the inhibition layer D and the pressure-sensitive adhesive layer E are not necessarily in contact, and another layer may be interposed therebetween. In addition, in the case of the second aspect, the base layer A also corresponds to a layer in contact with the inhibition layer D in addition to the visually recognizable layer C. However, the inhibition layer D and the base layer A are not necessarily in contact, and another layer such as an adhesive layer may be interposed therebetween.

In the first aspect, when the inhibition layer D is in contact with the visually recognizable layer C and the pressure-sensitive adhesive layer E, delamination (DF) and/or adhesive failure (AF) may occur at the interface between the inhibition layer D and the visually recognizable layer C or at the interface between the inhibition layer D and the pressure-sensitive adhesive layer E, but this occurs at one of these interfaces. In addition, in the second aspect, when the inhibition layer D is in contact with the base layer A and the visually recognizable layer C, delamination (DF) and/or adhesive failure (AF) may occur at the interface between the inhibition layer D and the base layer A or at the interface between the inhibition layer D and the visually recognizable layer C, but this occurs at one of these interfaces. The matter of which interface undergoes delamination (DF) and/or adhesive failure (AF) can be controlled by the combination and formation order of the materials of the inhibition layer D and the layer in contact with the inhibition layer D. Specific examples thereof will be described in the "Production method for easily peelable laminate label" section.

In addition, the form of failure at the interface between the inhibition layer D and the layer in contact with the inhibition layer D may be delamination (DF) only or adhesive failure (AF) only, or both types may occur. That is, in the present invention, "delamination (DF) and/or adhesive failure (AF)" refers to one of either delamination (DF) or adhesive failure (AF) or both delamination (DF) and adhesive failure (AF). When an easily peelable laminate film configured in this way is peeled after being attached to an adherend, the brittle layer B, which is further toward the base layer A than the visually recognizable layer C, is subjected to cohesive failure (CSF) in the inhibition layer non-formation region $A_N$ in the case of the first aspect described above. As a result, a portion of the brittle layer B peels along with the base layer A, and the visually recognizable layer C remains adhered to the pressure-sensitive adhesive layer E. On the other hand, in the inhibition layer formation region $A_D$, delamination (DF) and/or adhesive failure (AF) occurs at the interface of the inhibition layer D, which is further toward the pressure-sensitive adhesive layer E side than the visually recognizable layer C, resulting in a state in which the visually recognizable layer C is also peeled and pulled together with the base layer A. At this time, a large shearing force is applied to a position of the visually recognizable layer C corresponding to the edge of the inhibition layer D, and the visually recognizable layer C is cut in the thickness direction at the position corresponding to the edge of the inhibition layer D. As a result, the visually recognizable layer C remains at the site of the adherend from which the label was peeled with a pattern reflecting the pattern of the inhibition layer non-formation region $A_N$ (inverted pattern of the pattern of the inhibition layer D), and this pattern appears so that the pattern can be visually observed.

In addition, in the case of the second aspect, when the easily peelable laminate film is peeled after being attached to an adherend, the brittle layer B, which is further toward the pressure-sensitive adhesive layer E side than the visually recognizable layer C, is subjected to cohesive failure (CSF) in the inhibition layer non-formation region $A_N$, resulting in a state in which the visually recognizable layer C is also peeled and pulled together with the base layer A. On the other hand, in the inhibition layer formation region $A_D$, delamination (DF) and/or adhesive failure (AF) occurs at the interface of the inhibition layer D, which is further toward the base layer A side than the visually recognizable layer C, so the visually recognizable layer C remains adhered to the pressure-sensitive adhesive layer E. At this time, a large shearing force is applied to a position of the visually recognizable layer C corresponding to the edge of the inhibition layer D, and the visually recognizable layer C is cut in the thickness direction at the position corresponding to the edge of the inhibition layer D. As a result, the visually recognizable layer C remains at the site of the adherend from which the label was peeled with a pattern reflecting the pattern of the inhibition layer formation region $A_D$ (pattern of the inhibition layer D), and this pattern appears so that the pattern can be visually observed.

By using the pattern appearing this way as an indicator showing that the easily peelable laminate label of the present invention has been peeled, the matter of whether the label has been peeled from the adherend can be easily determined. Here, in the following explanations, the pattern of the inhibition layer D or an inverted pattern thereof appearing so as to be visually recognizable at the site from which the easily peelable laminate film was peeled may be called a "mark pattern".

In addition, the surface of the brittle layer B subjected to cohesive failure (CSF) is exposed to a region corresponding to the inhibition layer non-formation region $A_N$ of the site from which the easily peelable laminate label was peeled in this way. Since the surface of this brittle layer B form a rough surface, even in a case where an attempt is made to restore the label by reattaching the peeled portion, the peeled portion is difficult to be reattached. Therefore, once this easily peelable laminate label is peeled, it is difficult to restore to the state prior to the appearance of the mark pattern, which has the effect that it is difficult to conceal the fact that the label has been peeled.

Further, even if the peeled portion is attached to the site of the adherend from which the label was peeled using a pressure-sensitive adhesive or an adhesive agent, the presence of a pressure-sensitive adhesive or an adhesive agent causes a change in the opacity of the brittle layer B in the inhibition layer non-formation region $A_N$ or a change in the way that the visually recognizable layer C in the inhibition layer formation region $A_D$ looks, and the pattern corresponding to the pattern of the inhibition layer D or an inverted pattern thereof appears so as to be visually recognizable. Therefore, using this pattern as an indicator of the reattachment facilitates the determination of whether the label has been reattached after being peeled.

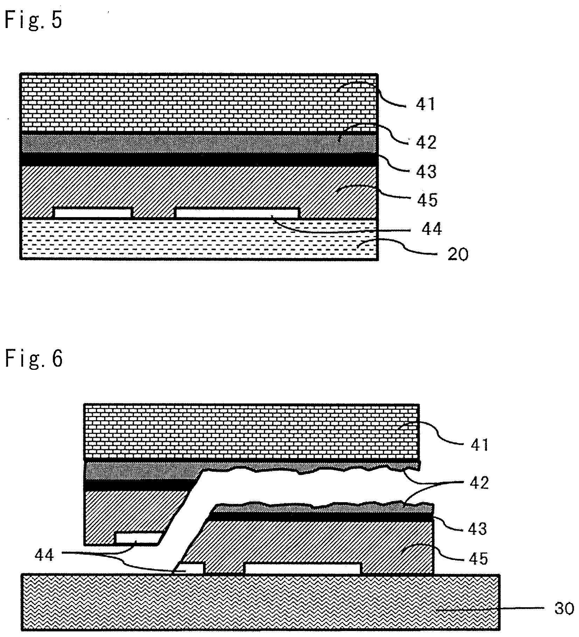

Here, as illustrated in FIG. 5, in the case of a label in which, in contrast to the configuration of the present invention, a base layer 41, a brittle layer 42, a printing layer 43, a pressure-sensitive adhesive layer 45, and an inhibition layer 44 provided in a discontinuous pattern are laminated in this order, when the label is peeled after a release liner 20 is peeled and the pressure-sensitive adhesive layer 45 is attached to an adherend 30, a state is reached in which delamination (DF) and/or adhesive failure (AF) occurs at the interface between the inhibition layer 44 and the adherend 30 in the inhibition layer formation region $A_D$, and the brittle layer 42, the printing layer 43, the pressure-sensitive adhesive layer 45, and the inhibition layer 44 are then peeled from the adherend 30 and pulled. In addition, in the inhibition layer non-formation region $A_N$, the brittle layer 42, which is further toward the base layer A side than the printing layer 43 is subjected to cohesive failure (CSF), so the printing layer 43 and the pressure-sensitive adhesive layer 44 remain held on the adherend 30 side. As a result, in principle, a shearing force is applied to the printing layer 43 and the pressure-sensitive adhesive layer 44 so that each layer is cut in the thickness direction, and the printing layer 43 of the inhibition layer non-formation region $A_N$ remains on the adherend side so that a mark pattern appears; However, as illustrated in FIG. 6, when this cutting process is examined in detail, the peeling of the inhibition layer 44 from the adherend 30 occurs first, but the inhibition layer 44 fractures at an intermediate stage. The failed surface starting at this fracture surface propagates in the thickness direction of the pressure-sensitive adhesive layer 45 and the printing layer 43 so as to reach the brittle layer 42, and the fracture further propagates in the in-plane direction of the brittle layer 42 and reaches the end edge. Here, the form of fracture in this breaking process is delamination (DF) and/or adhesive failure (AF) at the interface between the inhibition layer 44 and the adherend 30 before the fracture of the inhibition layer 44 occurs, but the form of fracture is cohesive failure (CSF) in all regions after the fracture of the inhibition layer 44 occurs. Since the pressure-sensitive adhesive layer 45 is designed with a relatively light disposition and is formed to be thick in order to increase the adhesive strength with the adherend 30, the fracture surface starting from the origin propagates through the pressure-sensitive adhesive layer 45 and deviates substantially in the horizontal direction in the process of reaching the printing layer 43. As a result, the mark pattern which ultimately appears due to the printing layer 43 becomes unclear, in contrast to the pattern of the inhibition layer 44. In contrast, with the configuration of the present invention, the visually recognizable layer C is cut immediately at a position corresponding to the edge of the inhibition layer D in contract with the visually recognizable layer C, and the pressure-sensitive adhesive layer E does not participate in the cutting process thereof. Thus, the visually recognizable layer C reflects the pattern of the inhibition layer D or an inverted pattern thereof so as to be cut with good precision. As a result, a distinct mark pattern reflecting the pattern of the inhibition layer D or an inverted pattern thereof can be obtained at the site from which the label was peeled.

Hereinafter, as a specific example of the easily peelable laminate label of the present invention, an easily peelable laminate film having a configuration in which the base layer A, the brittle layer B, the visually recognizable layer C, the inhibition layer D, and the pressure-sensitive adhesive layer E are laminated in this order (first aspect), and an easily peelable laminate film having a configuration in which the base layer A, the inhibition layer D, the visually recognizable layer C, the brittle layer B, and the pressure-sensitive adhesive layer E are laminated in this order (second aspect) will respectively be described.

First aspect

As illustrated in FIG. 1, the easily peelable laminate film of the first aspect of the present invention has a configuration in which a base layer A1, a brittle layer B2, a visually recognizable layer C3, an inhibition layer D4, and a pressure-sensitive adhesive layer E5 are laminated in this order. Each layer is in mutual contact with the adjacent layers, and the inhibition layer D4 is disposed in a discontinuous pattern. However, the base layer A1 and the brittle layer B2 are not necessarily in contact, and the inhibition layer D4 and the pressure-sensitive adhesive layer E5 are not necessarily in contact. Another layer may be interposed between the layers. In addition, in this aspect, a release liner 20 is provided on the surface of the pressure-sensitive adhesive layer E5.

This easily peelable laminate film 100a is configured so that the form of failure according to JIS K6866:1999 when the easily peelable laminate label attached to an adherend is subjected to 180° peeling in accordance with JIS K6854-2:1999 is delamination (DF) and/or adhesive failure (AF) at an interface between an inhibition layer D and a layer in contact with the inhibition layer D in a portion where the inhibition layer D is provided (inhibition layer formation region $A_D$) and cohesive failure (CSF) of the brittle layer B in a portion where the inhibition layer D is not provided (inhibition layer non-formation region $A_N$).

Here, in the first aspect, when the easily peelable laminate label is subjected to 180° peeling, the interface where delamination (DF) and/or adhesive failure (AF) occurs may be the interface between the inhibition layer D and the visually recognizable layer C or the interface between the inhibition layer D and the pressure-sensitive adhesive layer E, but this occurs at one of these interfaces. The matter of which interface undergoes delamination (DF) and/or adhesive failure (AF) can be controlled by the combination and formation order of the materials of the inhibition layer D and the layer in contact with the inhibition layer D. Specific examples thereof will be described in the "Production method for easily peelable laminate label" section. When delamination (DF) and/or adhesive failure (AF) occurs at the interface between the inhibition layer D and the visually recognizable layer C, the adhesive strength between the inhibition layer D and the visually recognizable layer C is preferably lower than the cohesive failure force inside the brittle layer B. When delamination (DF) and/or adhesive failure (AF) occurs at the interface between the inhibition layer D and the pressure-sensitive adhesive layer E, the adhesive strength between the inhibition layer D and the pressure-sensitive adhesive layer E is preferably lower than the cohesive failure force inside the brittle layer B. The magnitude correlation between the cohesive failure force inside the brittle layer B, and the adhesive strength between the inhibition layer D and the layer in contact with the inhibition layer D can be determined by the following peeling test.

In the peeling test, an easily peelable laminate label is first prepared. When the sample is an adherend with a label, the easily peelable laminate film is peeled from the adherend without causing the cohesive failure of the brittle layer B and interfacial peeling between the inhibition layer D and the layer in contact with the inhibition layer D. The examples of peeling include a method of reducing the adhesive force of the pressure-sensitive adhesive by heating the easily peelable laminate label with a heat source such as a dryer or an oven, a method of reducing the adhesive force of the pressure-sensitive adhesive by immersing the easily peelable laminate label in a solvent, or the like. Next, the adherend is attached to a PET film using a crimping device in accordance with JIS Z 0237:2009 so as to form a measurement sample. Next, the average peel force of the brittle layer B in the inhibition layer non-formation region $A_N$ when the easily peelable laminate label is subjected to 180° peeling and the adhesive strength between the inhibition layer D and the layer in contact with the inhibition layer D in the inhibition layer formation region $A_D$ are respectively measured in accordance with JIS K6854-2:1999.

Hereinafter, the peeling mechanism of an easily peelable laminate label configured so that delamination (DF) and/or adhesive failure (AF) occurs at the interface between the inhibition layer D and the pressure-sensitive adhesive layer E will be described with reference to FIGS. 1 and 2.

First, the release liner 20 is peeled from the easily peelable laminate label 100a illustrated in FIG. 1, and when the pressure-sensitive adhesive layer E5 is peeled from the adherend 30 after being attached to the adherend, cohesive failure (CSF) begins inside the brittle layer B2 and progresses along the in-plane direction through the inside of the brittle layer B2 in the inhibition layer non-formation region $A_N$ because the label has the property that failure progresses preferentially from regions of weaker strength. A portion of the brittle layer B2 is also peeled together with the base layer A. At this time, because the visually recognizable layer C3 is disposed further toward the pressure-sensitive adhesive layer E5 side than the brittle layer B2, the visually recognizable layer C3 remains attached to the pressure-sensitive adhesive layer E5. When the failure point reaches a position corresponding to the edge of the inhibition layer D4, which is present discontinuously, delamination (DF) and/or adhesive failure (AF) occurs at the interface between the inhibition layer D4 and the pressure-sensitive adhesive layer E5. This results in a state in which the brittle layer B2 and the printable layer C3, which are further toward the base layer A1 than the inhibition layer D4, and the inhibition layer D4 are peeled and pulled together with the base layer A1. At this time, a high shearing force is applied to the visually recognizable layer C3, and the visually recognizable layer C3 is cut in the thickness direction at the position corresponding to the edge of the inhibition layer D. As a result, as illustrated in FIG. 2, the visually recognizable layer C3 is peeled in the inhibition layer formation region $A_D$, resulting in a state in which only the visually recognizable layer C3 overlapping with the pattern of the inhibition layer non-formation region $A_N$ (inverted pattern of the pattern of the inhibition layer D) remains on the adherend 30. As a result, a mark pattern reflecting an inverted pattern of the pattern of the inhibition layer D4 appears so as to be visually recognizable at the site from which the label was peeled, and an inverted pattern of this mark pattern also appears so as to be visually recognizable on the peeled base layer A side. Using these mark patterns as an indicator showing that the label has been peeled, facilitates determination of whether the label has been peeled from the adherend 30.

Here, in the case of the easily peelable laminate label 100a of this first aspect, the visually recognizable layer C3 is immediately cut at a position corresponding to the edge of the inhibition layer D4, and the pressure-sensitive adhesive layer E5 does not participate in the cutting process thereof. Therefore, the visually recognizable layer C3 is cut with good precision at the position corresponding to the edge of the inhibition layer D and remains on the adherend 30 with a pattern which faithfully reflects an inverted pattern of the inhibition layer D. Therefore, a distinct mark pattern can be obtained.

In addition, the surface of the brittle layer B2 which remains on the adherend 30 together with the visually recognizable layer C3 is rough due to cohesive failure (CSF), which makes the peeled portion difficult to be attached even if an attempt is made to reattach the peeled portion. Therefore, once this easily peelable laminate label 100a is peeled, it is difficult to restore to the state prior to the appearance of the mark pattern, which has the effect that it is difficult to conceal the fact that the label has been peeled.

Further, when the brittle layer B2 is formed from a thermoplastic resin and a porous material obtained by stretching a film containing at least one of an inorganic fine powder and an organic filler, even if a peeled portion is reattached to the site from which the easily peelable laminate film 100a was peeled using an adhesive agent or a pressure-sensitive adhesive, the following mechanism enables the discrimination between the reattached label and the easily peelable laminate label 100a that has not been peeled.

Specifically, in the case of an easily peelable laminate label 100a in which the brittle layer B2 is formed from a porous material, the void portions of the brittle layer B2 are filled with air having a lower refractive index than non-void portions, and thus, the transparency is low. When such an easily peelable laminate label 100a is attached to an adherend 30, peeled from the adherend 30, and then the peeled portion is attached to the original location using a pressure-sensitive adhesive or an adhesive agent, the pressure-sensitive adhesive or adhesive agent and the solvents contained therein penetrate the voids of the brittle layer B2 because the surface of the brittle layer B2, which is a porous material, is exposed to the region corresponding to the inhibition layer non-formation region $A_N$ of the site from which the label was peeled. As a result, in the inhibition layer non-formation region $A_N$, the refractive index of the void portions of the brittle layer B2 approaches the refractive index of the non-void portions so that the appearance of the brittle layer B2 becomes translucent. On the other hand, since the brittle layer B2 in the inhibition layer formation region $A_D$ is peeled together with the visually recognizable layer C3 and the inhibition layer D4, the brittle layer B2 is protected by the visually recognizable layer C3 and the inhibition layer D4. As such, the pressure-sensitive adhesive or adhesive agent and the solvents contained therein cannot penetrate the voids. Therefore, the appearance of the brittle layer B2 does not change in the inhibition layer formation region $A_D$. As a result, the color saturation of printing in the inhibition layer non-formation region $A_N$ becomes higher than the color saturation of printing in the inhibition layer formation region $A_D$, and a mark pattern corresponding to the pattern of the inhibition layer non-formation region $A_N$ (inverted pattern of the pattern of the inhibition layer D) appears so as to be visually recognizable. Using this mark pattern as an indicator facilitates determination of whether the label has been reattached after being peeled.

Here, when the peeled portion is reattached using an emulsion-type pressure-sensitive adhesive or adhesive agent or a pressure-sensitive adhesive or adhesive agent containing an opaque material such as a white filler instead of a type of pressure-sensitive adhesive or the like which increases transparency, the appearance of the brittle layer B2 becomes opaque in the inhibition layer non-formation region $A_N$, and the color saturation of printing becomes lower than in the inhibition layer formation region $A_D$. As a result, a mark pattern corresponding to the pattern of the inhibition layer D appears so as to be visually recognizable, and using this mark pattern as an indicator facilitates determination of whether the label has been reattached after being peeled.

In addition, in the above explanation, a case in which the interface between the inhibition layer D4 and the pressure-sensitive adhesive layer E5 is subjected to delamination (DF) and/or adhesive failure (AF) is used as an example. However, the first aspect may also be configured so that the interface between the inhibition layer D and the visually recognizable layer C is subjected to delamination (DF) and/or adhesive failure (AF). This case differs in that when the label attached to the adherend is peeled, the inhibition layer D remains on the adherend side without being peeled, but this case is otherwise the same. Therefore, in this case as well, the same effects as those of a configuration in which the interface between the inhibition layer D and the pressure-sensitive adhesive layer E is subjected to delamination (DF) and/or adhesive failure (AF) can be achieved.

Second aspect

The easily peelable laminate film of the second aspect of the present invention has the same layer configuration as that of the first aspect described above with the exception that the three layers including the brittle layer B, the visually recognizable layer C, and the inhibition layer D, which are interposed between the base layer A and the pressure-sensitive adhesive layer E, are collectively inverted.

That is, as illustrated in FIG. 3, this easily peelable laminate film of the second aspect of the present invention has a configuration in which a base layer A1, an inhibition layer D4, a visually recognizable layer C2, a brittle layer B3, and a pressure-sensitive adhesive layer E5 are laminated in this order. Each layer is in mutual contact with the adjacent layers, and the inhibition layer D4 is disposed in a discontinuous pattern.

However, the base layer A1 and the brittle layer B2 are not necessarily in contact, and the inhibition layer D4 and the pressure-sensitive adhesive layer E5 are not necessarily in contact. Another layer may be interposed between each of the layers. In addition, in this aspect, a release liner 20 is provided on the surface of the pressure-sensitive adhesive layer E5.

This easily peelable laminate film 100b is configured so that the form of failure according to JIS K6866:1999 when the easily peelable laminate label attached to an adherend is subjected to 180° peeling in accordance with JIS K6854-2:1999 is delamination (DF) and/or adhesive failure (AF) at an interface between an inhibition layer D and a layer in contact with the inhibition layer D in a portion where the inhibition layer D is provided, and cohesive failure (CSF) of the brittle layer B in a portion where the inhibition layer D is not provided.

Here, in the second aspect, when the easily peelable laminate label is subjected to 180° peeling, the interface where delamination (DF) and/or adhesive failure (AF) occurs may be the interface between the inhibition layer D and the base layer A or the interface between the inhibition layer D and the visually recognizable layer C, but this occurs at one of these interfaces. The matter of which interface undergoes delamination (DF) and/or adhesive failure (AF) can be controlled by the combination and formation order of the materials of the inhibition layer D and the layer in contact with the inhibition layer D. Specific examples thereof will be described in the "Production method for easily peelable laminate label" section. When delamination (DF) and/or adhesive failure (AF) occurs at the interface between the inhibition layer D and the base layer A, the adhesive strength between the inhibition layer D and the base layer A is preferably lower than the cohesive failure force inside the brittle layer B. When delamination (DF) and/or adhesive failure (AF) occurs at the interface between the inhibition layer D and the visually recognizable layer C, the adhesive strength between the inhibition layer D and the visually recognizable layer C is preferably lower than the cohesive failure force inside the brittle layer B. The magnitude correlation between the cohesive failure force inside the brittle layer B and the adhesive strength between the inhibition layer D and the layer in contact with the inhibition layer D can be determined by the same peeling test as that explained in the first aspect.

Hereinafter, the peeling process of an easily peelable laminate label 100b configured so that delamination (DF) and/or adhesive failure (AF) occurs at the interface between the inhibition layer D and the visually recognizable layer C will be described with reference to FIGS. 3 and 4.

First, the release liner 20 is peeled from the easily peelable laminate label 100b illustrated in FIG. 3, and when the pressure-sensitive adhesive layer E5 is peeled from the adherend 30 after being attached to the adherend 30, as in the first aspect, cohesive failure begins inside the brittle layer B2 and progresses along the in-plane direction through the inside of the brittle layer B2 in the inhibition layer non-formation region $A_N$. At this time, the visually recognizable layer C3 is disposed further toward the base layer A1 side than the brittle layer B2, resulting in a state in which the visually recognizable layer C3 is peeled and pulled together with a portion of the brittle layer B2 and the base layer A1. When the failure point reaches a position corresponding to the edge of the inhibition layer D4, which is present discontinuously, delamination (DF) and/or adhesive failure (AF) occurs at the interface between the inhibition layer D4 and the visually recognizable layer C3, and the inhibition layer D4 is peeled together with the base layer A1. At this time, since the visually recognizable layer C3 is provided further toward the pressure-sensitive adhesive layer E5 side than the inhibition layer D4, the visually recognizable layer C3 remains on the pressure-sensitive adhesive layer E5 side. However, as a result of the visually recognizable layer C3 being pulled in the inhibition layer non-formation region $A_N$, a high shearing force is applied to the visually recognizable layer C3. Consequently, the visually recognizable layer C3 is cut in the thickness direction at a position corresponding to the edge of the inhibition layer D. As a result, as illustrated in FIG. 4, the visually recognizable layer C3 is peeled in the inhibition layer non-formation region $A_N$, resulting in a state in which only the visually recognizable layer C3 overlapping with the pattern of the inhibition layer formation region $A_D$ (inverted pattern of the pattern of the inhibition layer D) remains on the adherend 30. As a result, a mark pattern reflecting an inverted pattern of the pattern of the inhibition layer D4 appears so as to be visually recognizable at the site from which the label was peeled, and an inverted pattern of this mark pattern also appears so as to be visually recognizable on the peeled base layer A side. Using these mark patterns as an indicator showing that the label has been peeled, facilitates determination of whether the label has been peeled from the adherend 30.

Here, in the case of the easily peelable laminate label 100b of this second aspect, the visually recognizable layer C3 is immediately cut at a position corresponding to the edge of the inhibition layer D4, and the pressure-sensitive adhesive layer E5 does not participate in the cutting process thereof. Therefore, the visually recognizable layer C3 is cut with good precision at the position corresponding to the edge of the inhibition layer D and remains with a pattern which faithfully reflects the pattern of the inhibition layer D. Therefore, a distinct mark pattern can be obtained.

In addition, in the case of the easily peelable laminate label 100b of the second aspect, the brittle layer B2 and the visually recognizable layer C3 are laminated on the pressure-sensitive adhesive layer E5 at the site from which the label was peeled, and the surface of the pressure-sensitive adhesive layer E5 is not exposed. Therefore, the site from which the label was peeled does not become sticky, and the adherence of contamination to the site can be avoided.

In addition, as described above, the surface of the brittle layer B2 which remains at the site from which the label was peeled is rough due to cohesive failure (CSF). This makes the peeled portion difficult to attach even if an attempt is made to reattach the peeled portion. Therefore, once this easily peelable laminate label 100b is peeled, it is difficult to be restored, which has the effect that it is difficult to conceal the fact that the label has been peeled.

Further, in the second aspect, even if a peeled portion is reattached to the site from which the easily peelable laminate film 100b was peeled using an adhesive agent or a pressure-sensitive adhesive, the following mechanism enables the discrimination between the reattached label and the easily peelable laminate label 100b that has not been peeled.

Specifically, in the second aspect, as described above, when the easily peelable laminate label 100b attached to the adherend 30 is peeled, the inhibition layer D4 is peeled from the adherend 30 together with the base layer A, and the visually recognizable layer C3 remains in the inhibition layer formation region $A_D$ at the site from which the label was peeled. On the other hand, the visually recognizable layer C in the inhibition layer non-formation region $A_N$ is peeled together with the base layer A. When the peeled portion is attached to the original location using a pressure-sensitive adhesive or an adhesive agent from this state, the pressure-sensitive adhesive or adhesive agent and solvents contained therein infiltrate the space between the visually recognizable layer C3 and the inhibition layer D4, resulting in a state in which the visually recognizable layer C3 is difficult to be seen from the base layer A side. In contrast, since the visually recognizable layer C3 in the inhibition layer non-formation region $A_N$ is peeled together with the base layer A1 as described above, the pressure-sensitive adhesive or adhesive agent and solvents do not infiltrate the space between the visually recognizable layer C3 and the base layer A1, and the appearance from the base layer A1 side is approximately the same as the appearance prior to peeling. As a result, a mark pattern corresponding to the pattern of the inhibition layer non-formation region $A_N$ (inverted pattern of the pattern of the inhibition layer D) appears so as to be visually recognizable, and using this as an indicator facilitates determination of whether the label has been reattached after being peeled.

Such a mark pattern appears particularly prominently when an emulsion-type pressure-sensitive adhesive or adhesive agent or a pressure-sensitive adhesive or adhesive agent containing an opaque material such as a white filler is used to reattach the peeled portion, so the matter of whether the label has been reattached after being peeled can be easily determined.

Here, in the above explanation, a case in which the interface between the inhibition layer D4 and the visually recognizable layer C3 is subjected to delamination (DF) and/or adhesive failure (AF) is used as an example. However, the second aspect may also be configured so that the interface between the inhibition layer D and the base layer A is subjected to delamination (DF) and/or adhesive failure (AF). This case differs in that when the label attached to the adherend is peeled, the inhibition layer D remains on the adherend side without being peeled, but this case is otherwise the same. Therefore, in this case as well, the same effects as those of a configuration in which the interface between the inhibition layer D and the visually recognizable layer C3 is subjected to delamination (DF) and/or adhesive failure (AF) can be achieved.

Configuration of each layer constituting the easily peelable laminate label

Each layer constituting the easily peelable laminate label of the present invention will be described in detail hereinafter.

Base layer A

The base layer A is a layer which is in contact with the brittle layer B in the first aspect of the present invention and is in contact with the inhibition layer D in the second aspect of the present invention. The base layer A has greater strength than the strength of the brittle layer B or the inhibition layer D in contact with the base layer A. When the easily peelable laminate label is peeled from the adherend, peeling and fracture do not occur inside the base layer A, or peeling or fracture is unlikely to occur. The magnitude correlation of the strengths of the base layer A, the brittle layer B, and the inhibition layer D can be determined by the location and form of failure when the easily peelable laminate label is peeled from the adherend. When the easily peelable laminate label is peeled from the adherend, the label has the property that failure progresses preferentially from regions of weaker strength. Thus, peeling progresses due to one or more states of cohesive failure (CSF) of the brittle layer B, delamination at the interface of the inhibition layer D, and adhesive failure at the interface of the inhibition layer D when the strength of the base layer A is greater than that of the brittle layer B and the inhibition layer D. At this time, the base layer A is peeled without remaining on the adherend. On the other hand, when the strength of the base layer A is lower than the strengths of the brittle layer B and the inhibition layer D, the cohesive failure (CSF) of the base layer A and/or substrate failure (SF) occurs, and at least a portion of the base layer A remains on the adherend.

The peeling of the easily peelable laminate film is achieved by subjecting the easily peelable laminate label to 180° peeling using a tensile tester in accordance with JIS K6854-2:1999. In addition, the location and form of failure are determined visually by the presence or absence of the base layer A on the adherend in accordance with JIS K6866: 1999.

The base layer A preferably has high transparency from the perspective that the visually recognizable layer C can be visually observed through the base layer A in the state before the label is peeled. Therefore, the base layer A is preferably formed from a material containing from 40 to 100 mass% of a thermoplastic resin and from 0 to 60 mass% of at least one of an inorganic fine powder and an organic filler. In this case, the content of the thermoplastic resin in the base layer A is preferably from 40 to 100 mass% and more preferably from 60 to 100 mass%. In addition, the content of the at least one of an inorganic fine powder and an organic filler in the base layer A is preferably from 60 to 0 mass% and more preferably from 40 to 0 mass%. When the content of the inorganic fine powder and/or organic filler in the base layer A becomes large, the transparency is diminished. However, reduction in the thickness of the base layer A and laminating the layer with a layer having a low content of an inorganic fine powder and/or organic filler, can provide a base layer A having high transparency while ensuring sufficient strength. Note that either an inorganic fine powder or organic filler may be used, or both may be used in combination. When either an inorganic fine powder or an organic filler is used, the content of either component may be within the range described above, and when both are used in combination, the total content thereof may be within the range described above.

Examples of the thermoplastic resin contained in the base layer A include thermoplastic resins including ethylene-based resins such as high-density polyethylene, medium-density polyethylene, and low-density polyethylene, and ethylene-cyclic olefin copolymers; propylene-based resins; polyolefin-based resins such as polymethyl-1-pentene; polyamide-based resins such as nylon-6, nylon-6,6, nylon-6,10, and nylon-6,12; thermoplastic polyester-based resins such as polyethylene terephthalate and copolymers thereof, polyethylene naphthalate, and aliphatic polyester; polycarbonate-based resins; polystyrene-based resins such as atactic polystyrene, and syndiotactic polystyrene; and polyphenylene sulfide. One type of these may be used alone, or two or more types of these may be mixed and used. Among these, use of polyethylene terephthalate and polyolefin-based resins is preferable. Furthermore, among polyolefin-based resins, propylene-based resins and high-density polyethylenes are more preferable from the perspectives of cost, water resistance, and chemical resistance.

As such propylene-based resins, polypropylene that is a propylene homopolymer and that exhibits isotactic or syndiotactic or various degrees of stereoregularity, or copolymers prepared by polymerizing propylene as a primary monomer component and an $\alpha$-olefin such as ethylene, butene-1, hexene-1, heptene-1, and 4-methylpentene-1 are preferably used. These copolymers may be bipolymers, terpolymers, or quaterpolymers, and may be random copolymers or block copolymers.

Examples of the inorganic fine powder contained in the base layer A include calcium carbonate, calcined clay, silica, diatomaceous earth, talc, titanium oxide, barium sulfate, alumina, and the like. One type of these may be used alone, or two or more types may be used in combination.

The average particle size of the inorganic fine powder in terms of the median diameter corresponding to a cumulative value of 50% in a volume-based particle size distribution measured by a laser diffraction method based on JIS-Z8825-1:2001 is preferably from 0.01 to 15 μm, more preferably from 0.05 to 8 μm, and even more preferably from 0.1 to 4 μm.

As the organic filler contained in the base layer A, a resin of a different type than the thermoplastic resin serving as a main component is preferably selected. For example, when the thermoplastic resin serving as a main component is a polyolefin-based resin, as the organic filler, polyethylene terephthalate, polybutylene terephthalate, polycarbonate, nylon-6, nylon-6,6, homopolymers of cyclic olefin, copolymers of cyclic olefin and ethylene, and the like are preferably used.

In addition, a substance which is incompatible with the thermoplastic resin serving as a main component and has a melting point of from 120°C to 300°C and a glass transition temperature of from 120°C to 280°C may also be preferably used as an organic filler. Here, the "melting point" of the organic filler refers to the melting point measured by differential scanning calorimetry (DSC) in accordance with JIS K 7121:2012. The "glass transition temperature" of the organic filler refers to the glass transition temperature measured by differential scanning calorimetry (DSC) in accordance with JIS K 7121:2012. One type of these organic fillers may be used alone, or two or more types may be used in combination.

The average dispersion particle size of the organic filler is preferably from 0.01 to 15 μm, more preferably from 0.05 to 8 μm, and even more preferably from 0.1 to 4 μm. Here, the "average dispersion particle size" of the organic filler is measured by image observation of each layer constituting the base layer A. Specifically, the average dispersion particle size is determined by measuring the primary particle sizes of 20 organic filler particles in an adjacent range from a cross-sectional image of the (layer to be observed of the) base layer A observed with a scanning electron microscope (SEM), and then determining the average of the primary particle sizes of 20 particles.

In addition to a thermoplastic resin, an inorganic fine powder, and/or an organic filler, dispersants or additives may be added in the base layer A. The dispersant content is preferably from 0 to 10 mass%, and the additive content is preferably from 0 to 10 mass%.

Note that the content of the thermoplastic resin, at least one of an inorganic fine powder and an organic filler, dispersants, and additives in the base layer A is a value calculated by defining the total mass of all materials contained in the base layer A as 100 mass%. For descriptions and specific examples of the dispersants or additives used in the base layer A, refer to the descriptions and specific examples of dispersants or additives used in the brittle layer B.

The base layer A may have a single layer structure or may have a multilayer structure in which two or more layers are laminated. When the base layer A has a two-layer structure including an A1 layer and an A2 layer, it is possible to impart various functions such as writability, printing applicability, thermal transfer printability, gas barrier properties, abrasion resistance, and secondary processability with the A2 layer while maintaining the strength as a support during peeling with the A1 layer. In addition, the A1 layer may be co-extruded into a three-layer structure including an A1a layer, an Alb layer, and an A1c layer in a T-die. In this case, the problems associated with forming such as sticking can be solved with the A1a layer and the A1c layer while maintaining the strength as a support during peeling with the A1b layer. In addition, in the case of the first aspect of the present invention, the easily peelable laminate film can be formed with the base layer A and the brittle layer B.

The base layer A may be unstretched or may be uniaxially stretched or biaxially stretched. In the case of biaxial stretching, sequential biaxial stretching or simultaneous biaxial stretching may be used. The base layer A preferably has one or more layer stretched in at least one axial direction from the perspective of adjusting to a rigidity suited to the processability and printing applicability for producing the easily peelable laminate label. That is, a combination of an unstretched layer and a uniaxially stretched layer, a uniaxially stretched layer and a biaxially stretched layer, an unstretched layer and a biaxially stretched layer, or the like may be selected as the layer configuration of the base layer A. In the case of sequential biaxial stretching, the layer may be subjected to transverse-direction stretching after machine-direction stretching or may be subjected to machine-direction stretching after transverse-direction stretching, but a method of performing transverse-direction stretching after machine-direction stretching is preferable from the perspective of the labor saving of the production equipment.

The thickness of the base layer A is preferably greater than the thickness of the brittle layer B. As a result, the breaking strength of the base layer A becomes greater than the breaking strength of the brittle layer B, and when the label is peeled with the base layer A, the prescribed performance of the present invention can be exhibited without the breaking of the base layer A. In addition, the thickness of the base layer A is preferably not less than 50 $\mu$m and more preferably not less than 80 $\mu$m. On the other hand, the thickness of the base layer A is preferably not greater than 500 $\mu$m, more preferably not greater than 300 $\mu$m, and even more preferably not greater than 200 $\mu$m. As a result, the rigidity of the base layer A can be adjusted to a level suited to the processability and printing applicability for producing the easily peelable laminate label.

The thickness of the base layer A can be determined by measuring the thickness of the layer cross section using a scanning electron microscope.

There may be printing information or decoration information on the surface of the base layer A not in contact with the brittle layer B or the inhibition layer D (surface on the opposite side as the side of each of these layers B and D), that is, the outermost surface of the easily peelable laminate label.

The printing information and/or design (decoration information) to be printed or typed includes letters and symbols, diagrams and pictures, and the like. Examples thereof include trade name, name of manufacturer, name of seller, place of origin, expiration date, best before date, lot number, explanation of method of use, precautions for use, hazard statement, GHS classification, note for indicating that peeling-off was performed, storing method, names of ingredients, quantity of content, bar code, two-dimensional code, design for product identification, logo mark, corporate mark, recycling symbol, ticket for application, serial number, character, patterns such as ruled lines, and the like. These can be suitably selected and combined.

As the printing/typing method, a printing/typing method such as sheet-feed offset printing, rotary offset printing, gravure printing, flexo printing, letterpress printing, screen printing, electrophotographic printing, or the like may be suitably selected for use.

In addition, there may be a coating layer on the surface of the base layer A not in contact with the brittle layer B or the inhibition layer D (surface on the opposite side as the side of each of these layers B and D), and the coating layer may contain either a thermosensitive color developing agent or an ink fixative. As a result, printing/typing can be performed on the base layer A by appropriately selecting a method from printing methods such as thermal printing, fusion-type thermal transfer printing, and inkjet printing. This printing/typing may be performed on the base layer A prior to the formation of the easily peelable laminate label, or the printing/typing may be performed on the base layer A after the formation of the easily peelable laminate label. In the latter case, printing/typing on the base layer A is performed after a release liner is attached to the surface of the pressure-sensitive adhesive layer E of the easily peelable laminate label. In addition, a coating layer containing a releasing agent may be provided on the surface of the base layer A not in contact with the brittle layer B or the inhibition layer D (surface on the opposite side as the side of each of these layers B and D). In this case, the coating layer functions as a release liner when a plurality of easily peelable laminate films are overlapped so that the coating layer surface and the pressure-sensitive adhesive layer E surface are aligned. This eliminates the need to use a release liner as a separate member. As a result, it possible to achieve the effect of reducing the number of parts of the easily peelable laminate film.

Brittle layer B

In the present invention, the brittle layer B is a layer having a relatively weaker breaking strength than other layers so that the layer is easily subjected to cohesive failure when the easily peelable laminate film attached to the adherend is peeled. The magnitude correlation of the breaking strengths of the brittle layer B and other layers can be determined by the location and form of failure when the easily peelable laminate label is peeled from the adherend.

When the easily peelable laminate label is peeled from the adherend, the label has the property that failure progresses preferentially from regions of weaker strength. Therefore, when the breaking strength of the brittle layer B is relatively weaker than that of the other layers, peeling progresses due to the cohesive failure (CSF) of the brittle layer B in the inhibition layer non-formation region $A_N$, and the brittle layer B remains on the peeling surfaces on both the adherend side and the easily peelable laminate film. On the other hand, when the breaking strength of the brittle layer B is relatively greater than the other layers, peeling progresses due to one or more states of cohesive failure (CSF), substrate failure (SF), delamination (DF), and adhesive failure (AF) of the other layers in the inhibition layer non-formation region $A_N$, and the brittle layer B does not remain on the peeling surfaces of both the adherend side and the easily peelable laminate film.

At this time, the peeling of the easily peelable laminate film is performed by subjecting the easily peelable laminate label to 180° peeling using a tensile tester in accordance with JIS K6854-2:1999. In addition, the location and form of failure are determined visually by the presence or absence of the base layer A on the adherend in accordance with JIS K6866:1999.

A tissue-based natural pulp paper or a low-weight nonwoven fabric, for example, may be used for the brittle layer B.

In addition, the brittle layer B is also preferably made of a film which contains a thermoplastic resin and has a nonuniform structure. A "nonuniform structure" is a structure consisting of a heterogeneous system in which two or more types of phases coexist. An example of a film having such a nonuniform structure is a film having a nonuniform structure formed by allowing one or more types selected from inorganic fine powders, organic fillers, air bubbles, and other thermoplastic resins incompatible with a given thermoplastic resin to coexist with the thermoplastic resin. Of these, more stable peelability can be achieved by using a film containing at least one of an inorganic fine powder and an organic filler as well as a thermoplastic resin for the brittle layer B.

When the brittle layer B contains a thermoplastic resin and at least one of an inorganic fine powder and an organic filler, the brittle layer B contains a thermoplastic resin in an amount of from 22 to 99.9 mass% and preferably from 22 to 80 mass%, at least one of an inorganic fine powder and an organic filler in an amount of from 0 to 85 mass% and preferably from 20 to 78 mass%, and a dispersant in an amount of from 0.1 to 10 mass% from the perspective of achieving sufficient peelability and forming stability. In the case of the first aspect of the present invention, from the perspective of ensuring that the brittle layer B is subjected to cohesive failure and the base layer A is not subjected to cohesive failure when the easily peelable laminate label attached to an adherend is peeled, the content of at least one of an inorganic fine powder and an organic filler contained in the brittle layer B is preferably at least 8 mass% greater and more preferably at least 10 mass% greater than the content of at least one of an inorganic fine powder and an organic filler contained in the base layer A. Specifically, the content of at least one of an inorganic fine powder and an organic filler in the brittle layer B is preferably from 33 to 78 mass% and more preferably from 42 to 60 mass%. Note that either an inorganic fine powder or organic filler may be used, or both may be used in combination. When either an inorganic fine powder or an organic filler is used, the content of either component may be within the range described above, and when both are used in combination, the total content thereof may be within the range described above. When the amount of the filler is small, the average peel force of the brittle layer B becomes greater than the breaking strength of the other layers, and since peeling due to the failure of the brittle layer B does not progress when the label is peeled, a mark pattern may not remain on the adherend. In addition, when the amount of the filler is large, the tensile breaking force of the visually recognizable layer C becomes greater than the average peel force of the brittle layer B, and peeling progresses due to in-layer failure of the brittle layer B even in the inhibition layer formation region $A_D$, without the breaking of the visually recognizable layer C occurring at the end of the inhibition layer D, so a mark pattern may not remain on the adherend. Further, depending on the type of the printer, peeling based on the cohesive failure of the brittle layer B may occur during the printing process.

In addition, the brittle layer B is more preferably a stretched film produced by stretching a film containing the thermoplastic resin described above and the at least one of an inorganic fine powder and an organic filler in at least one axial direction. This stretched film has a porous structure with multiple voids originating from the inorganic fine powder and the organic filler and has excellent thickness uniformity due to stretch forming. Therefore, by using this stretched film for the brittle layer B, fluctuations in peel strength are suppressed, and the peeling of the label can be performed stably. In addition, as described above, a dispersant is preferably added to the stretched film used for the brittle layer B. By adding a dispersant, the void size distribution becomes narrow in the stretched resin film layer. As a result, fluctuations in the peel strength of the brittle layer B are suppressed, and the peeling of the label can be performed stably.

Examples of the thermoplastic resin contained in the brittle layer B include thermoplastic resins including ethylene-based resins such as high-density polyethylene, medium-density polyethylene, low-density polyethylene, and ethylene-cyclic olefin copolymers; propylene-based resins; polyolefin-based resins such as polymethyl-1-pentene; polyamide-based resins such as nylon-6, nylon-6,6, nylon-6,10, and nylon-6,12; thermoplastic polyester-based resins such as polyethylene terephthalate and copolymers thereof, polyethylene naphthalate, and aliphatic polyester; polycarbonate-based resins; polystyrene-based resins such as atactic polystyrene, and syndiotactic polystyrene; and polyphenylene sulfide. One type of these may be used alone, or two or more types of these may be mixed and used. Among these, use of polyolefin-based resins is preferred. Furthermore, among polyolefin-based resins, propylene-based resins and high-density polyethylenes are more preferable from the perspectives of cost, water resistance, and chemical resistance. As such propylene-based resins, polypropylene that is a propylene homopolymer and that exhibits isotactic or syndiotactic or various degrees of stereoregularity, or copolymers prepared by polymerizing propylene as a primary monomer component and an $\alpha$-olefin such as ethylene, butene-1, hexene-1, heptene-1, and 4-methylpentene-1 are preferably used. These copolymers may be bipolymers, terpolymers, or quaterpolymers, and may be random copolymers or block copolymers.

Examples of the inorganic fine powder contained in the brittle layer B include calcium carbonate, calcined clay, silica, diatomaceous earth, talc, titanium oxide, barium sulfate, alumina, and the like. One type of these may be used alone, or two or more types may be used in combination.

The average particle size of the inorganic fine powder in terms of the median diameter corresponding to a cumulative value of 50% in a volume-based particle size distribution measured by a laser diffraction method based on JIS-Z8825-1:2001 is preferably from 0.01 to 15 $\mu$m, more preferably from 0.05 to 8 $\mu$m, and even more preferably from 0.1 to 4 $\mu$m.

As the organic filler, a resin of a different type than the thermoplastic resin serving as a main component is preferably selected. For example, when the thermoplastic resin serving as a main component is a polyolefin-based resin, as the organic fine powder, polyethylene terephthalate, polybutylene terephthalate, polycarbonate, nylon-6, nylon-6,6, homopolymers of cyclic olefin, copolymers of cyclic olefin and ethylene, and the like are preferably used. In addition, a substance which is incompatible with the thermoplastic resin serving as a main component and has a melting point of from 120°C to 300°C and a glass transition temperature of from 120°C to 280°C may also be preferably used as an organic filler. Here, the "melting point" of the organic filler refers to the melting point measured by differential scanning calorimetry (DSC) in accordance with JIS K 7121:2012. The "glass transition temperature" of the organic filler refers to the glass transition temperature measured by differential scanning calorimetry (DSC) in accordance with JIS K 7121:2012. One type of these organic fillers may be used alone, or two or more types may be used in combination.

The average dispersion particle size of the organic filler is preferably from 0.01 to 15 $\mu$m, more preferably from 0.05 to 8 $\mu$m, and even more preferably from 0.1 to 4 $\mu$m. Here, the "average dispersion particle size" of the organic filler is determined by measuring the primary particle sizes of 20 organic filler particles in an adjacent range from a cross-sectional image of the brittle layer B observed with a scanning electron microscope (SEM), and then determining the average of the primary particle sizes of 20 particles.

The dispersant added to the brittle layer B acts as an adhesive agent for binding the thermoplastic resin and the fine powder. The dispersant has a function of suppressing the generation of paper dust due to the dropping of the fine powder and simultaneously preventing the aggregation of the inorganic fine powder so as to uniformly disperse the powder in the brittle layer B and to facilitate the formation of multiple uniform, fine voids. As a result, fluctuations in the peel strength of the brittle layer B are suppressed, and the peeling of the easily peelable laminate label can be performed stably. The dispersant content in the brittle layer B is more preferably not less than 0.3 mass% and even more preferably not less than 0.5 mass% from the perspective of achieving the functions described above. On the other hand, when the dispersant content is too high, a thermal degradation product of the dispersant adheres and accumulates on the lip of the die at the time of the extrusion forming of the brittle layer B, which tends to form a gum. Further, contamination of the product by the gum or stretch tearing at the time of formation tends to occur. Therefore, from the perspective of suppressing these problems, the dispersant content in the brittle layer B is more preferably not greater than 5 mass% and even more preferably not greater than 3 mass%.

Examples of the dispersants include acid-modified polyolefins, silanol-modified polyolefins, and the like. Among these, the use of an acid-modified polyolefin is preferable. Examples of the acid-modified polyolefins include acid anhydride group-containing polyolefins formed by subjecting maleic anhydride to random copolymerization or graft copolymerization, carboxylic acid group-containing polyolefins formed by subjecting unsaturated carboxylic acid, such as methacrylic acid and acrylic acid, to random copolymerization or graft copolymerization, epoxy group-containing polyolefins formed by subjecting glycidyl methacrylate to random copolymerization or graft copolymerization, and the like. Specific examples include maleic anhydride-modified polypropylene, maleic anhydride-modified polyethylene, acrylic acid-modified polypropylene, ethylene-methacrylic acid random copolymers, ethylene-glycidyl methacrylate random copolymers, ethylene-glycidyl methacrylate graft copolymers, glycidyl methacrylate-modified polypropylene, and the like. Among these, acid-modified polyolefins are preferable, and maleic anhydride-modified polypropylenes and maleic anhydride-modified polyethylenes are more preferable. One type of these dispersing agents may be used alone or two or more types of these dispersing agents may be used in combination.

Specific examples of the maleic anhydride-modified polypropylene and the maleic anhydride-modified polyethylene include Modic AP P513V (trade name) or Modic AP M513 (trade name) manufactured by Mitsubishi Chemical Corporation, Yumex 1001 (trade name), Yumex 1010 (trade name), or Yumex 2000 (trade name) manufactured by Sanyo Chemical Industries, Ltd., HPR VR101 (trade name) manufactured by DuPont-Mitsui Polychemicals Co., Ltd., and the like.

The acid modification ratio of the acid-modified polyolefin is preferably not less than 0.01 mass%, and more preferably not less than 0.05 mass% because the effect of dispersing the surface-treated inorganic fine powder into the thermoplastic resin tends to be sufficiently achieved easily. In addition, since the softening point of the acid-modified polyolefin does not become too low, the compounding of the acid-modified polyolefin with the thermoplastic resin tends to become relatively easy, the acid modification ratio is preferably not greater than 20 mass% and more preferably not greater than 15 mass%.

In addition to the thermoplastic resin and at least one of an inorganic fine powder and an organic filler, other additives may be added to the brittle layer B. The additive content in the brittle layer B is preferably from 0 to 10 mass%. Note that the contents of the thermoplastic resin, inorganic fine powder and/or organic filler, dispersants, and additives in the brittle layer B is a value calculated by defining the total mass of all materials contained in the brittle layer as 100 mass%.

Examples of the additives added to the brittle layer B include various additives such as light resistant agents, antioxidants, heat resistant agents, ultraviolet absorbers, preservatives, dyes, pH adjusting agents, and defoaming agents. These additives are preferably added within the range of from 0 to 10 mass% from the perspective of not inhibiting the formability of the brittle layer B.

The brittle layer B may be unstretched or may be uniaxially stretched or biaxially stretched, but the brittle layer B is preferably stretched in at least one axial direction from the perspective of generating multiple voids of a uniform size when a composition containing a thermoplastic resin and at least one of an inorganic fine powder and an organic filler or a composition produced by mixing two or more incompatible thermoplastic resins is used as the material of the brittle layer B. In the case of biaxial stretching, sequential biaxial stretching or simultaneous biaxial stretching may be used. In the case of sequential biaxial stretching, the layer may be subjected to transverse-direction stretching after machine-direction stretching or may be subjected to machine-direction stretching after transverse-direction stretching, but a method of performing transverse-direction stretching after machine-direction stretching is preferable from the perspective of the labor saving of the production equipment.

The thickness of the brittle layer B is preferably large from the perspective of the stability of the peel strength. The thickness is preferably small from the perspective of forming a brittle layer B having relatively high transparency and enhancing the information visibility prior to peeling. To achieve a balance of these factors, the thickness of the brittle layer B is preferably from 0.1 to 13 $\mu$m, more preferably from 0.3 to 7 $\mu$m, and even more preferably from 0.5 to 5 $\mu$m. As a result, both the stability of peel strength and information visibility prior to peeling can be achieved.

The thickness of the brittle layer B can be determined by measuring the thickness of the layer cross section using a scanning electron microscope.

The peel strength of the brittle layer B is dependent on the void fraction, and the peel strength of the brittle layer B can be adjusted to a low level by increasing the void fraction. On the other hand, trouble such as breaking can be suppressed at the time of stretch forming by keeping the void fraction of the brittle layer B low. Specifically, the void fraction of the brittle layer B is preferably from 10 to 60% and more preferably from 20 to 45%. With a brittle layer B having a void fraction within the range described above, trouble such as breaking is suppressed at the time of stretch forming, and the layer can be subjected to cohesive failure relatively easily when the easily peelable laminate label is peeled from the adherend.

The measurement of the void fraction is performed by observing a cross section of the easily peelable laminate label, determining the proportion of void portions in a specific field of the brittle layer B by a mapping of the cross-sectional image of a scanning electron microscope (SEM), and using this proportion as the void fraction.

Easily peelable laminate film

As described above, the first aspect of the present invention has a laminated structure in which a base layer A and a brittle layer B are laminated, and when the easily peelable laminate label attached to the adherend is peeled with the base layer A, the brittle layer B is subjected to cohesive failure, which allows the base layer A to be easily peeled from the adherend. Based on such a function, in the present specification, the laminated structure of the first aspect including the base layer A and the brittle layer B may be called an "easily peelable laminate film". In the first aspect, the visually recognizable layer C is viewed through this easily peelable laminate film, so the opacity thereof significantly affects information visibility. Therefore, from the perspective of satisfying the conditions of information visibility prior to peeling, superimposition information visibility after peeling, and information visibility after reattachment described below, the opacity of the easily peelable laminate film defined by JIS P8149:2000 is preferably not greater than 70%, more preferably not greater than 65%, and even more preferably not greater than 60%. On the other hand, the opacity of the easily peelable laminate film has a lower limit due to the porous structure of the brittle layer B. The opacity of the easily peelable laminate film is preferably not less than 25% from the perspective of sufficiently securing the void fraction of the brittle layer B.

The easily peelable laminate film may be produced by respectively forming the base layer A and the brittle layer B, stretching the layers as necessary, and then attaching both layers. However, from the perspective of stably producing the brittle layer B with a uniform thickness, the easily peelable laminate film is preferably produced by laminating the base layer A and the brittle layer B and then collectively stretching the two layers. At this time, the two layers may be collectively stretched by laminating the two layers after uniaxially stretching each of the base layer A or the brittle layer B prior to lamination.


Visually recognizable layer C

The visually recognizable layer C is visually recognizable through the base layer A and the brittle layer B (easily peelable laminate film) in the case of the first aspect of the present invention when the easily peelable laminate label is attached to the adherend, and is visually recognizable through the base layer A and the inhibition layer D in the inhibition layer formation region $A_D$ and visually recognizable through the base layer A in the inhibition layer non-formation region $A_N$ in the case of the second aspect of the present invention.

In addition, in the case of the first aspect of the present invention, when the easily peelable laminate label attached to the adherend is peeled, the visually recognizable layer C is peeled together with the base layer A in the inhibition layer formation region $A_D$ and remains on the adherend side in the inhibition layer non-formation region $A_N$. In the case of the second aspect of the present invention, the visually recognizable layer C remains on the adherend side in the inhibition layer formation region $A_D$ and is peeled together with the base layer A in the inhibition layer non-formation region $A_N$.

In addition, when the portion peeled from the adherend is reattached to the portion remaining on the adherend, the visually recognizable layer C returns to the state prior to the peeling of the label unless the layer is fractured at a portion corresponding to the end of the inhibition layer D. Note that, as described in the sections regarding the first and second aspects, a pattern indicating a peeling mark with a reattached label appears due to a difference in the opacity of the brittle layer in the case of the first aspect of the present invention and appears due to an adhesive agent or a pressure-sensitive adhesive infiltrating the space between the inhibition layer D and the visually recognizable layer C in the case of the second aspect of the present invention.

The visually recognizable layer C preferably includes at least one type of printing pattern selected from designs, characters, symbols, background patterns, dots, geometric patterns, random patterns, and solid patterns. Among these, when the label is used to determine whether the label has been wrongfully peeled, the visually recognizable layer C preferably includes a solid printing pattern which completely covers the surface of the brittle layer B. As a result, in the state prior to the peeling of the easily peelable laminate label, the pattern of the inhibition layer D becomes difficult to confirm with the naked eye, which can prevent such an intended purpose from being known.

In the first aspect of the present invention, in particular, when the portion peeled from the adherend is reattached to the site of the adherend from which the label was peeled, the visually recognizable layer C preferably does not allow the permeation of a pressure-sensitive adhesive or an adhesive agent and solvents contained therein from the perspective of generating a distinct mark pattern.

In addition, from the perspective of breaking the visually recognizable layer C with good precision in a pattern corresponding to the pattern of the inhibition layer D when the label attached to the adherend is peeled, the tensile breaking force thereof is preferably smaller than the average peel force of the brittle layer B.

The magnitude correlation between the tensile breaking force of the visually recognizable layer C and the average peel force of the brittle layer B is determined so that the average peel force of the brittle layer B is assessed to be stronger than the tensile breaking force of the visually recognizable layer C in a case where the visually recognizable layer C is broken at the end of the inhibition layer D when the easily peelable laminate label is peeled from the adherend. That is, when the tensile breaking force of the visually recognizable layer C is stronger than the average peel force of the brittle layer B, the visually recognizable layer C is subjected to substrate failure (SF) at the end of the inhibition layer D, and a mark pattern appears on the label and the adherend. On the other hand, when the tensile breaking force of the visually recognizable layer C is weaker than the average peel force of the brittle layer B, the visually recognizable layer C is not subjected to substrate failure (SF) at the end of the inhibition layer D. Peeling progresses due to cohesive failure inside the brittle layer B, so a mark pattern following the pattern of the inhibition layer D does not remain. When the visually recognizable layer C is broken, the substrate failure (SF) of the visually recognizable layer C is determined visually in accordance with JIS K6866:1999. When an easily peelable laminate label satisfying this relationship is attached to the adherend and the label is peeled from a location corresponding to the end of the inhibition layer non-formation region $A_N$, the failure of the brittle layer B is begun from the end of the inhibition layer non-formation region $A_N$, and the failure point progresses in the in-plane direction through the inside of the brittle layer B. The tensile fracture of the visually recognizable layer C is then induced at the moment that this failure point reaches a location where the visually recognizable layer C and the inhibition layer D make contact (inhibition layer formation region $A_D$). Next, the failure point moves and progresses to the interface between the inhibition layer D and the layer in contact with the inhibition layer D (that is, the visually recognizable layer C, the pressure-sensitive adhesive layer E, or the base layer A). The tensile fracture of the visually recognizable layer C is induced at the moment that the failure point reaches the inhibition layer non-formation region $A_N$. This failure point then reaches the interface between the brittle layer B and the visually recognizable layer C and progresses through the inside of the brittle layer B. When the inhibition layer D is provided at the end thereof, the visually recognizable layer C is further subjected to tensile fracture at the moment that the failure point reaches the inhibition layer formation region $A_D$ and the inhibition layer non-formation region $A_N$ due to the same mechanism as that described above.

In the process described above, delamination (DF) and/or adhesive failure (AF) occurs at the interface between the inhibition layer D and the layer in contact with the inhibition layer D in the inhibition layer formation region $A_D$, and the cohesive failure of the brittle layer B occurs while the visually recognizable layer C is subjected to tensile fracture at an intermediate point in the inhibition layer non-formation region $A_N$. As a result, the visually recognizable layer C is cut into a pattern which faithfully replicates the pattern of the inhibition layer D. As a result, a mark pattern corresponding to the pattern of the inhibition layer D or an inverted pattern thereof appears on the adherend side or the peeled base layer side.

The tensile breaking force of the visually recognizable layer C can be adjusted by the composition of the ink used in the visually recognizable layer C or the thickness of the visually recognizable layer C.

Note that when the visually recognizable layer C is at least one printing pattern selected from designs, characters, symbols, background patterns, dots, and geometric patterns rather than a solid printing pattern, the visually recognizable layer C is cut according to the process described above. In this case, the pattern of the visually recognizable layer C after cutting is a shape in which the pattern of the inhibition layer D is cut out from the printing pattern of the visually recognizable layer C, and a mark pattern corresponding to the pattern or an inverted pattern thereof appears on the adherend side or the peeled base layer side.

The material constituting the visually recognizable layer C is not particularly limited as long as the material can impart contrast to the adherend, and examples thereof include dyes or pigments typically used as coloring materials. In addition, the visually recognizable layer C may be a white or a black material. Alternatively, the visually recognizable layer C may be a mixture of two or more types of materials.

Examples of dyes include water-insoluble dyes including sulfur dyes such as sulfur black T; vat dyes such as indanthrone; spirit soluble dyes such as spirit blue; oil-soluble dyes such as sedan II; disperse dyes such as celliton fast violet B; and water-soluble dyes including basic dyes such as methylene blue; acidic dyes such as orange II; direct dyes such as congo red; soluble vat dyes such as anthrasol O; acid mordant dyes such as eriochrome black T; and mordant dyes such as alizarin red S.

Examples of pigments include condensed polycyclic pigments including phthalocyanine pigments such as copper phthalocyanine blue; monoazo lake pigments such as lake red C; monoazo pigments such as toluidine red; disazo pigments such as disazo yellow AAA; condensed azo pigments such as condensed azo yellow GR; metal complex azo pigments such as nickel azo yellow; anthraquinone pigments such as indanthrone blue; thioindigo pigments such as thioindigo bordeaux; perynone dyes such as perynone orange; perylene dyes such as perylene scarlet; quinacridone pigments such as quinacridone red; dioxazine pigments such as dioxazine violet; isoindolinone pigments such as isoindolinone yellow; quinophthalone pigments such as quinophthalone yellow; and isoindoline pigments such as isoindoline yellow; nitroso pigments such as nickel nitroso yellow; alizalin lake pigments such as madder lake; metal complex salt azomethine pigments such as copper azomethine yellow; other organic pigments such as aniline black pigments and alkali blue pigments; and organic pigments such as chrome yellow, chrome vermilion, red oxide, iron black, titanium yellow, cerulean blue, yellow iron oxide, cadmium yellow, cadmium red, lithopone, molybdate orange, zinc chromate, ultramine blue, manganese violet, cobalt violet, emerald green, Prussian blue, cobalt blue, cobalt green, chromium oxide, viridian, and carbon black. These pigments may be used alone, or two or more types may be mixed and used.
The materials constituting the visually recognizable layer C may include a resin binder and/or a solvent as necessary in addition to the materials described above and may be provided in the form of a coating material or an ink.

As the printing method for forming the visually recognizable layer C, printing methods such as sheet-feed offset printing, rotary offset printing, gravure printing, flexo printing, letterpress printing, and screen printing can be suitably selected for use.

Inhibition layer D

The inhibition layer D is a layer which forms a pattern for the mark pattern appearing on the adherend side when the easily peelable laminate label is peeled from the adherend, and the inhibition layer D is disposed in a discontinuous pattern. The pattern of the inhibition layer D (shape from a plan view) preferably includes at least one type of pattern selected from designs, characters, symbols, woven patterns, dots, geometric patterns, and random patterns from the perspective of instantly determining the pattern visually.

In the present invention, delamination (DF) and/or adhesive failure (AF) occurs at the interface between the inhibition layer D and the layer in contact with the inhibition layer D in the inhibition layer formation region $A_D$, and the cohesive failure of the brittle layer B occurs in the inhibition layer non-formation region $A_N$. As a result, the visually recognizable layer C is cut at a position corresponding to the edge of the inhibition layer D. As a result, in the case of the first aspect, a mark pattern reflecting an inverted pattern of the pattern of the inhibition layer D may be made to appear on the adherend side. At this time, delamination (DF) and/or adhesive failure (AF) may occur at the interface between the inhibition layer D and the visually recognizable layer C or at the interface between the inhibition layer D and the pressure-sensitive adhesive layer E. On the other hand, in the case of the second aspect, as described above, delamination (DF) and/or adhesive failure (AF) and cohesive failure (CSF) occur, which allows a mark pattern corresponding to the pattern of the inhibition layer D to appear on the adherend side. At this time, delamination (DF) and/or adhesive failure (AF) may occur at the interface between the inhibition layer D and the visually recognizable layer C or at the interface between the inhibition layer D and the base layer A.

Examples of the material constituting the inhibition layer D include silicone resins, acrylic resins, tetrafluoroethylene resins (Teflon (trade name) or the like), cellulose ether resins, polyether resins, and mat particles. Among these, a material which can be cured after being applied by printing or the like is preferably used.
In the first aspect of the present invention, in particular, from the perspective of generating a distinct pattern when the portion peeled from the adherend is reattached to the site of the adherend from which the label was peeled, the visually recognizable layer C preferably does not allow the permeation of a pressure-sensitive adhesive or an adhesive agent and solvents contained therein, and the inhibition layer D preferably has high transparency. Clear varnish for printing such as OP varnish, peeling varnish, water-based varnish, or UV varnish is suitable as the material of the inhibition layer D in that the material satisfies these performance requirements.
One type of these materials of the inhibition layer D may be used alone, or two or more types may be used in combination.

A printing method is preferably used as the method for forming the inhibition layer D from the perspective of generating a distinct mark pattern.
Here, in the case of the first aspect of the present invention, the inhibition layer D may be formed using the surface of the pressure-sensitive adhesive layer E as a printed surface, or the inhibition layer D may be formed using the surface of the visually recognizable layer C as a printed surface. However, in the case of a type in which printing is achieved by bringing a plate into contact with the layer, the inhibition layer D can be provided without bringing the plate into contact with the pressure-sensitive adhesive layer E. Thus, the inhibition layer D is preferably formed using the surface of the visually recognizable layer C as a printed surface. In addition, in the case of the second aspect of the present invention, the inhibition layer D may be formed using the surface of the base layer A as a printed surface, or the inhibition layer D may be formed using the surface of the visually recognizable layer C as a printed surface.
As the printing method, printing methods such as sheet □ feed offset printing, rotary offset printing, gravure printing, flexo printing, letterpress printing, and screen printing can be suitably selected for use. When the inhibition layer D is formed using the surface of the visually recognizable layer C as a printed surface, a method using a UV-curable ink and varnish can be preferably used on a color printing machine.

The thickness of the inhibition layer D is preferably large from the perspective of not breaking the inhibition layer D due to stress when peeling the label. The thickness of the inhibition layer D is preferably small from the perspective of preventing the pattern of the inhibition layer D from being visually recognized in the state prior to the peeling of the label. To achieve a balance of these factors, the thickness of the inhibition layer D is preferably from 0.1 to 5 $\mu$m, more preferably from 0.3 to 3 $\mu$m, and even more preferably from 0.5 to 2 $\mu$m. As a result, the fracture of the inhibition layer D at the time of the peeling of the label can be reliably suppressed while concealing the pattern of the inhibition layer D in the state prior to the peeling of the label.

Pressure-sensitive adhesive layer E

In the case of the first aspect of the present invention, the pressure-sensitive adhesive layer E is provided so as to be in contact with the inhibition layer D. In the case of the second aspect of the present invention, the pressure-sensitive adhesive layer E is provided so as to be in contact with the brittle layer B.

The pressure-sensitive adhesive contained in the pressure-sensitive adhesive layer E is not particularly limited. Examples thereof include rubber-based pressure-sensitive adhesives, acrylic pressure-sensitive adhesives, and silicone pressure-sensitive adhesives.

Specific examples of the rubber-based pressure-sensitive adhesive include polyisobutylene rubber, butyl rubber, and mixtures of these, and materials in which a tackifier, such as rosin abietate, a terpene-phenol copolymer, or a terpene-indene copolymer, is blended into such a rubber-based pressure-sensitive adhesive, and the like. Specific examples of the acrylic pressure-sensitive adhesive include substances having a glass transition point of -20°C or lower such as 2-ethylhexylacrylate/n-butyl acrylate copolymers and 2-ethylhexylacrylate/ethyl acrylate/methyl methacrylate copolymers. In addition, the pressure-sensitive adhesive layer E may be a heat-sensitive adhesive layer using a heat-sensitive adhesive agent.

These pressure-sensitive adhesives may be used in a form such as a solvent type, an emulsion type, or a hot melt type.

From the perspective of preventing the label from being peeled without leaving behind a mark on the adherend by heating the label so as to soften the pressure-sensitive adhesive and to reduce the adhesive force thereof, the pressure-sensitive adhesive layer E may be a moisture-curable adhesive agent, a heat-curable adhesive agent, a curing agent-containing adhesive agent, or a UV-curable adhesive agent.

The pressure-sensitive adhesive layer E can be formed by the coating of the pressure-sensitive adhesive. This coating can be performed with a bar coater, blade coater, comma coater, die coater, air-knife coater, gravure coater, lip coater, reverse coater, roller coater, spray coater, or the like. The coated pressure-sensitive adhesive is smoothened as necessary, and the pressure-sensitive adhesive layer E is formed via a drying process.

In the process for forming the pressure-sensitive adhesive layer E, a method of attaching a release liner as necessary after the pressure-sensitive adhesive is applied directly to the surface of the inhibition layer D or the brittle layer B and dried (direct method) may be used. In addition, a method of applying the pressure-sensitive adhesive to a release liner, drying the adhesive as necessary to form a pressure-sensitive adhesive layer, and then laminating the layer on the surface of the inhibition layer D or the brittle layer B (reverse method) may also be employed.

From the perspective that the failure point transitions from adhesive failure at the interface between the adherend and the pressure-sensitive adhesive layer E to cohesive failure inside the brittle layer B when the easily peelable laminate label is peeled from the adherend, the adhesive force between the pressure-sensitive adhesive layer E and the adherend and the correlation strength between the pressure-sensitive adhesive layer and other layers are preferably greater than the average peel strength of the brittle layer B. In the correlation described above, it is determined visually that a portion of the brittle layer B remains on the adherend side when the easily peelable laminate label is peeled from the adherend. When the adhesive strength between the pressure-sensitive adhesive layer E and the adherend and the correlation strength between the pressure-sensitive adhesive layer E and other layers are relatively stronger than the average peel force of the brittle layer B, peeling progresses due to the cohesive failure (CSF) of the brittle layer B in the inhibition layer non-formation region $A_N$. Thus, portions of the pressure-sensitive adhesive layer E and the brittle layer B remain on the adherend side, and the brittle layer B remains on the peeling surface of the easily peelable laminate film.

When the adhesive strength between the pressure-sensitive adhesive layer E and the adherend is relatively stronger than the average peel force of the brittle layer B, peeling progresses due to at least one of the states of adhesive failure (AF) at the interface between the pressure-sensitive adhesive layer E and the adherend, cohesive failure (CF) of the pressure-sensitive adhesive layer E, and special cohesive failure (SCF) of the pressure-sensitive adhesive layer E in the inhibition layer non-formation region $A_N$. Thus, the pressure-sensitive adhesive layer E remains on the label side, and the failure of the brittle layer B does not occur.

When the correlation strength between the pressure-sensitive adhesive layer E and other layers is relatively stronger than the average peel force of the brittle layer B, peeling progresses due to adhesive failure (AF) at the interface between the pressure-sensitive adhesive layer E and other layers in the inhibition layer non-formation region $A_N$. Thus, only the pressure-sensitive adhesive layer E remains on the adherend side with no peeling due to in-layer cohesive failure of the brittle layer B, and at least a portion of the brittle layer B does not remain.

The peeling of the easily peelable laminate film is achieved by subjecting the easily peelable laminate label to 180° peeling using a tensile tester in accordance with JIS K6854-2:1999. In addition, the location and form of failure are determined visually by the presence or absence of the base layer A on the adherend in accordance with JIS K6866:1999. The adhesive force between the pressure-sensitive adhesive layer E and the adherend is preferably within the range of from 1.5 to 22 N/15 mm and is preferably higher than the peel strength of the brittle layer B. The adhesive force between the pressure-sensitive adhesive layer E and the adherend can be measured by applying a pressure-sensitive adhesive of the same material as the pressure-sensitive adhesive layer E to a sheet of the same material as the adherend and laminating a sheet of the same material as the adherend onto the pressure-sensitive adhesive surface so as to produce a measurement sample, and then subjecting the easily peelable laminate label to 180° peeling using a tensile tester in accordance with JIS K6854-2:1999. The adhesive force between the pressure-sensitive adhesive layer E and the adherend can be adjusted by changing the materials of the pressure-sensitive adhesive layer E and the adherend, and an appropriate material with which sufficient adhesive force can be achieved is preferably selected.

The coated amount of the pressure-sensitive adhesive layer E is not particularly limited as long as the adhesive force between the pressure-sensitive adhesive layer E and the adherend is within the range described above. However, the amount is preferably from 3 to 60 $g/m^2$ and more preferably from 10 to 40 $g/m^2$ in terms of solid content after drying.

When the adhesive force between the surface of the inhibition layer D or the brittle layer B and the pressure-sensitive adhesive layer E is lower than the peel strength of the brittle layer B and peeling occurs at the adhesive interface between the layers, an anchor coating agent is preferably applied to the surface prior to the application of the pressure-sensitive adhesive.

Polyurethane, polyisocyanate/polyetherpolyol, polyisocyanate/polyesterpolyol/polyethyleneimine, alkyl titanate, and the like may be used as the anchor coating agent. These are typically used after being dissolved in an organic solvent such as methanol, ethyl acetate, toluene, or hexane or water.

The coated amount of the anchor coating agent is, in terms of solid content after the drying, preferably in the range of from 0.01 to 5 $g/m^2$, and more preferably in the range of from 0.02 to 2 $g/m^2$.

The pressure-sensitive adhesive layer E may contain a colorant from the perspective of emphasizing the color difference between the inhibition layer formation region $A_D$ and the inhibition layer non-formation region $A_N$ after peeling. The colorant is not particularly limited as long as the colorant can impart contrast to the adherend, and the dyes or pigments listed as examples of coloring materials contained in the visually recognizable layer C may be used, or mixtures thereof may be used. The dyes and pigments are not particularly limited and may be selected while taking into consideration the suitability at the time of pressure-sensitive adhesive layer formation and the solvent used for the purpose of peeling.

In addition, the pressure-sensitive adhesive layer E may also have a pattern structure. This pattern may be unrelated to the pattern of the inhibition layer D.

For example, an uneven shape may be provided on the surface of the pressure-sensitive adhesive layer E so that when the easily peelable laminate label is attached to the adherend, the air trapped between the easily peelable laminate label and the adherend is allowed to escape. See JP 03-243677 A, for example, for specific conditions for implementing this design. In addition, the pressure-sensitive adhesive layer E may also be provided as a discontinuous layer (in a discontinuous pattern) for the same purpose. See JP 11-323790 A, for example, for specific conditions for implementing this design.

Release liner

A release liner may be provided as necessary on the easily peelable laminate label of the present invention on the outside (opposite side as the base layer A side) of the pressure-sensitive adhesive layer E. Examples of release liners include wood-free paper, kraft paper, or a thermoplastic film used as is, or a material which is obtained by subjecting a wood-free paper or kraft paper to calendar processing, resin coating, or film lamination, a material which is obtained by subjecting glassine paper, coated paper, or a plastic film to silicone treatment, or the like.

The surface of the release liner in contact with the pressure-sensitive adhesive layer E is preferably subjected to silicone treatment to enhance the peelability with the pressure-sensitive adhesive layer E.

Characteristics and performance of the easily peelable laminate film Form of failure

When the easily peelable laminate label of the present invention is subjected to 180° peeling in accordance with JIS K 6854-2:1999, the interface between the inhibition layer D and the layer in contact with the inhibition layer D and the brittle layer B fail with a specific form of failure. Specifically, the form of failure determined in accordance with JIS K6866:1999 is delamination (DF) and/or adhesive failure (AF) at an interface between an inhibition layer D and a layer in contact with the inhibition layer D in a portion where the inhibition layer D is provided (inhibition layer formation region $A_D$) and cohesive failure (CSF) of the brittle layer B in a portion where the inhibition layer D is not provided (inhibition layer non-formation region $A_N$).

Since the easily peelable laminate label of the present invention satisfies the conditions described above, when the easily peelable laminate label is peeled from the adherend after being attached to the adherend, a mark pattern corresponding to the pattern of the inhibition layer D appears on the peeled base layer A side, and a mark pattern corresponding to an inverted pattern of the pattern of the inhibition layer D appears on the adherend side. In addition, in the case of the second aspect, a mark pattern corresponding to the pattern of the inhibition layer D appears on the adherend side, and a mark pattern corresponding to an inverted pattern of the pattern of the inhibition layer D appears on the peeled base layer A side.

Average peel force

The peel force of the easily peelable laminate label of the present invention is preferably large (heavy feel of use) from the perspective of ensuring that the laminated structure of each layer constituting the label, the base layer A and the brittle layer B, in particular, does not cause peeling at the time of processing. On the other hand, the peel force is preferably small (light feel of use) from the perspective of making it possible to easily peel the easily peelable laminate label attached to the adherend by hand.

The peel force of the easily peelable laminate label can be evaluated by the average peel force in the region where the inhibition layer D is not provided, that is, the average peel force of the brittle layer B, when the easily peelable laminate label is subjected to 180° peeling in accordance with JIS K6854-2:1999.

More specifically, the average peel force refers to the stress arising when the peeling of the brittle layer B stabilizes after the easily peelable laminate label is attached to an aluminum plate in accordance with JIS Z0237:2000 and the easily peelable laminate label and the aluminum plate are then subjected to 180° peeling using a tensile tester in accordance with JIS K6854-2:1999. Here, the phrase "the peeling of the brittle layer B stabilizes" means that peeling occurs at a roughly constant rate without jumping and without the peel force falling to zero.

The average peel force of the easily peelable laminate label of the present invention measured in this way is preferably from 0.1 to 4.0 N/15 mm, more preferably not greater than 3.5 N/15 mm, and even more preferably not greater than 3.0 N/15 mm. As a result, high yield is achieved by suppressing the peeling of each layer at the time of processing, and a relatively light feel of use can be achieved when the easily peelable laminate label attached to the adherend is peeled.

Security

When the easily peelable laminate label of the present invention is peeled after being attached to an adherend, a visually recognizable mark pattern appears clearly. Using this mark pattern as an indicator showing that the label has been peeled enables determination of whether the label has been peeled from the adherend. In addition, once this easily peelable laminate label is peeled, it is difficult to be restored to the state prior to the appearance of the mark pattern, so the label has high security performance.

To express even higher security performance, the following three conditions are all preferably satisfied when the L-value, a-value, and b-value are measured under conditions with a light source of D50 and a viewing angle of 2° using a spectrophotometer in a state in which the easily peelable laminate label is attached to the adherend surface.

Condition 1: The information visibility prior to peeling ($\Delta E_X$) is not greater than 0.4. Here, the information visibility prior to peeling ($\Delta E_X$) is the color difference between the portion where the inhibition layer D is provided (inhibition layer formation region $A_D$) (X1) and the portion where the inhibition layer D is not provided (inhibition layer non-formation region $A_N$) (X2) in the state prior to peeling.

[Equation 1]

$$\Delta E_X = \sqrt{(L_{X1} - L_{X2})^2 + (a_{X1} - a_{X2})^2 + (b_{X1} - b_{X2})^2}$$

In the equation above, $L_{X1}$ is the L-value measured in the portion where the inhibition layer D is provided (X1); $L_{X2}$ is the L-value measured in the portion where the inhibition layer D is not provided (X2); $a_{X1}$ is the a-value measured in the portion where the inhibition layer D is provided (X1); $a_{X2}$ is the a-value measured in the portion where the inhibition layer D is not provided (X2); $b_{X1}$ is the b-value of the portion where the inhibition layer D is provided (X1); and $b_{X2}$ is the b-value of the portion where the inhibition layer D is not provided (X2).

Condition 1 indicates that the pattern originating from the inhibition layer D is difficult to be confirmed visually in the state in which the easily peelable laminate label is attached to the adherend surface. $\Delta E_X$ is more preferably not greater than 0.2 and even more preferably not greater than 0.1.

Condition 2: The superimposition information visibility after peeling ($\Delta E_Y$) is not less than 3.2.
Here, the superimposition information visibility after peeling ($\Delta E_Y$) is the color difference between the portion where the inhibition layer D is provided (inhibition layer formation region $A_D$) (Y1) and the portion where the inhibition layer D is not provided (inhibition layer non-formation region $A_N$) (Y2) in a state in which, after the label is peeled and separated into the base layer A side and the adherend side, both sides are superimposed at the original position without anything in between.

[Equation 2]

$$\Delta E_Y = \sqrt{(L_{Y1} - L_{Y2})^2 + (a_{Y1} - a_{Y2})^2 + (b_{Y1} - b_{Y2})^2}$$

In the equation above, $L_{Y1}$ is the L-value measured in the portion where the inhibition layer D is provided (Y1); $L_{Y2}$ is the L-value measured in the portion where the inhibition layer D is not provided (Y2); $a_{Y1}$ is the a-value measured in the portion where the inhibition layer D is provided (Y1); $a_{Y2}$ is the a-value measured in the portion where the inhibition layer D is not provided (Y2); $b_{Y1}$ is the b-value of the portion where the inhibition layer D is provided (Y1); and $b_{Y2}$ is the b-value of the portion where the inhibition layer D is not provided (Y2).

Condition 2 indicates that after the label is peeled and the pattern appears, it cannot be restored by simply superimposing the label. $\Delta E_y$ is more preferably not less than 6.5 and even more preferably not less than 10.0.

Condition 3: The information visibility after reattachment ($\Delta E_Z$) is not less than 3.2. Here, the information visibility after reattachment ($\Delta E_Z$) is the color difference between the portion where the inhibition layer D is provided (inhibition layer formation region $A_D$) (Z1) and the portion where the inhibition layer D is not provided (inhibition layer non-formation region $A_N$) (Z2) in a state in which, after the label is peeled and separated into the base layer A side and the adherend side, both sides are superimposed at the original position with an adhesive agent or a pressure-sensitive adhesive interposed therebetween.

[Equation 3]

$$\Delta E_Z = \sqrt{(L_{Z1} - L_{Z2})^2 + (a_{Z1} - a_{Z2})^2 + (b_{Z1} - b_{Z2})^2}$$

In the equation above, $L_{Z1}$ is the L-value measured in the portion where the inhibition layer D is provided (Z1); $L_{Z2}$ is the L-value measured in the portion where the inhibition layer D is not provided (Z2); $a_{Z1}$ is the a-value measured in the portion where the inhibition layer D is provided (Z1); $a_{Z2}$ is the a-value measured in the portion where the inhibition layer D is not provided (Z2); $b_{Z1}$ is the b-value of the portion where the inhibition layer D is provided (Z1); and $b_{Z2}$ is the b-value of the portion where the inhibition layer D is not provided (Z2).

Condition 3 indicates that once the label has been peeled, the label cannot be restored when wrongfully attached using an adhesive agent or a pressure-sensitive adhesive. $\Delta E_Z$ is preferably not less than 6.5, more preferably not less than 10.0, even more preferably not less than 13.0, and particularly preferably not less than 20.0.

Sharpness

From the perspective of increasing security in the present invention, the generated pattern is preferably distinct when the easily peelable laminate label is peeled from an adherend having an easily peelable laminate label, when the peeled portion is superimposed with the original position of the adherend, and when the peeled portion is reattached to the original position of the adherend. The matter of whether the pattern is distinct is assessed by the following indicator of sharpness.

The pattern of the evaluation sample may differ from the assessment pattern used in the examples described below and is not particularly limited as long as the pattern is visible. The sharpness is assessed for a simple graphical pattern or character pattern in accordance with the pattern of the evaluation sample, and an evaluation of "good", "moderate", and "passable" is considered passing.

The easily peelable laminate label of the present invention can achieve high sharpness because of a design in which a shearing force is instantly applied to the visually recognizable layer C at the end of the inhibition layer D in the peeling direction so as to cut the visually recognizable layer C.

The indicator of sharpness is common to both the assessment of a character pattern and the assessment of simple graphics, and the indicator is as follows.

Good: The cutting of the visually recognizable layer C is in accordance with the pattern of the inhibition layer D, and the reproducibility is high. A simple graphical pattern or character pattern can be read instantly.

Moderate: The cutting of the visually recognizable layer C is roughly in accordance with the pattern of the inhibition layer D. A simple graphical pattern or character pattern can be read.

Passable: The cutting of the visually recognizable layer C is not in accordance with the pattern of the inhibition layer D, and there are gaps or missing parts in the pattern. A simple graphical pattern or character pattern can be read.

Poor: The cutting of the visually recognizable layer C does not occur, or in a case where cutting does occur, there are significant defects such as the cutting of the pattern. A simple graphical pattern or character pattern cannot be read.

Production method for easily peelable laminate label

Next, the production method for the easily peelable laminate label of the first aspect described above and the production method for the easily peelable laminate label of the second aspect described above will be described as production methods for the easily peelable laminate label of the present invention.

Production method for the easily peelable laminate label of the first aspect

The production method for the easily peelable laminate label of the first aspect of the present invention includes producing an easily peelable laminate film by laminating a base layer A and a brittle layer B (step a); providing a visually recognizable layer C on a brittle layer B side surface of the easily peelable laminate film (step b); laminating the visually recognizable layer C and an inhibition layer D so as to be in contact with each other (step c); and laminating the inhibition layer D and a pressure-sensitive adhesive layer E so as to be in contact with each other (step d). Steps a to d described above may be performed beginning from any step, and the order thereof is unimportant. In addition, two or more steps may be performed consecutively.

The following two methods are specific examples of the production method for this easily peelable laminate label. First, in one example of a production method for an easily peelable laminate label, the following steps are performed consecutively: producing an easily peelable laminate film by laminating a base layer A and a brittle layer B (step a); then providing a visually recognizable layer C on a brittle layer B side surface of the easily peelable laminate film (step b); and laminating the visually recognizable layer C and an inhibition layer D so as to be in contact with each other (step c). Here, a UV-curable offset ink is used as the visually recognizable layer C; a UV-curable varnish is used as the inhibition layer D; and the inhibition layer D is cured by irradiation with UV rays immediately after step c. Separately, a step of preparing a release liner, providing a pressure-sensitive adhesive layer E on the release liner, and finally laminating the inhibition layer D and the pressure-sensitive adhesive layer E so that the layers are in contact (step d) is performed. As a result, the adhesive force between the inhibition layer D and the visually recognizable layer C can be designed so as to be higher than the adhesive force between the inhibition layer D and the pressure-sensitive adhesive layer E. When the obtained easily peelable laminate label is peeled after being attached to the adherend, adhesive failure (AF) occurs at the interface between the inhibition layer D and the pressure-sensitive adhesive layer E in the inhibition layer formation region $A_D$, and the inhibition layer D is peeled together with the base layer A. On the other hand, cohesive failure (CSF) occurs inside the brittle layer B in the inhibition layer non-formation region $A_N$.

In addition, in another example of a production method for the easily peelable laminate label, the following steps are performed: producing an easily peelable laminate film by laminating a base layer A and a brittle layer B (step a); and then providing a visually recognizable layer C on a brittle layer B side surface of the easily peelable laminate film (step b). Separately, a step of preparing a release liner, providing a pressure-sensitive adhesive layer E on the release liner, and laminating the inhibition layer D and the pressure-sensitive adhesive layer E so that the layers are in contact with each other (step d) is performed, and a step of laminating the visually recognizable layer C and the inhibition layer D so that the layers are in contact (step c) is finally performed. Here, by using a film which is typically used as an adhesion inhibiting part for a pressure-sensitive adhesive (kill film) as the inhibition layer D, there is no adhesive force whatsoever between the inhibition layer D and the visually recognizable layer C. This enables a design in which the inhibition layer D and the pressure-sensitive adhesive layer E are attached to each other. When the obtained easily peelable laminate label is peeled after being attached to the adherend, delamination (DF) occurs at the interface between the inhibition layer D and the visually recognizable layer C in the inhibition layer formation region $A_D$, and the inhibition layer D remains on the adherend side, while the brittle layer B and the visually recognizable layer C are peeled together with the base layer A. Cohesive failure occurs inside the brittle layer B in the inhibition layer non-formation region $A_N$.

Production method for the easily peelable laminate label of the second aspect

The production method for an easily peelable laminate film of the second aspect of the present invention includes providing an inhibition layer D on a surface of a base layer A (step $\alpha$); laminating the inhibition layer D and a visually recognizable layer C so as to be in contact with each other (step $\beta$); laminating the visually recognizable layer C and a brittle layer B so as to be in contact with each other (step $\gamma$); and laminating the brittle layer B and a pressure-sensitive adhesive layer E so as to be in contact with each other (step $\delta$). Steps $\alpha$ to $\delta$ described above may be performed beginning from any step, and the order thereof is unimportant. In addition, two or more steps may be performed consecutively. In addition, in a case where the adhesive force between the laminated materials is weak in step $\alpha$ described above, the materials may be laminated with an adhesive agent or a pressure-sensitive adhesive interposed therebetween.

At this time, unless an adhesive agent or a pressure-sensitive adhesive is used, delamination (DF) occurs at the interface between the inhibition layer D and the base layer A. When an adhesive agent or a pressure-sensitive adhesive is used, adhesive failure (AF) occurs at the interface between the inhibition layer D and the visually recognizable layer C.

The following two methods are specific examples of the production method for this easily peelable laminate label. First, in one example of a production method for an easily peelable laminate label, a step of laminating the base layer A and the inhibition layer D so as to be in contact with each other (step $\alpha$) is performed. Here, a UV-curable varnish is used as the inhibition layer D, and the inhibition layer D is cured by irradiation with UV rays immediately after step $\alpha$. Next, a step of using an oil-based offset ink as the visually recognizable layer C and laminating the inhibition layer D and the visually recognizable layer C as to as to be in contact with each other (step $\beta$) is performed. Further, a step of laminating the visually recognizable layer C and the brittle layer B so as to be in contact with each other (step $\gamma$) is performed. This step $\gamma$ may be performed by providing a foam resin coat on the visually recognizable layer C and heat-curing the coat to form the brittle layer B. Separately, a step of preparing a release liner, providing a pressure-sensitive adhesive layer E on the release liner, and finally laminating the brittle layer B and the pressure-sensitive adhesive layer E so that the layers are in contact (step $\delta$) is performed.

As a result, the adhesive force between the inhibition layer D and the base layer A can be designed so as to be higher than the adhesive force between the inhibition layer D and the visually recognizable layer C. When the obtained easily peelable laminate label is peeled after being attached to the adherend, delamination (DF) occurs at the interface between the inhibition layer D and the visually recognizable layer C in the inhibition layer formation region $A_D$, and the inhibition layer D is peeled together with the base layer A. Cohesive failure occurs inside the brittle layer B in the inhibition layer non-formation region $A_N$.

In another example of a production method for an easily peelable laminate label, a step of laminating the visually recognizable layer C and the brittle layer B so as to be in contact with each other (step $\gamma$) and a step of laminating the inhibition layer D and the visually recognizable layer C so as to be in contact with each other (step $\beta$) are performed consecutively. Here, a UV-curable varnish is used as the inhibition layer D; a UV-curable offset ink is used as the visually recognizable layer C; a thin paper sheet (low-weight natural pulp paper) is used as the brittle layer B; and the inhibition layer D is cured by irradiation with UV rays immediately after step $\beta$. Separately, a step of preparing a transparent film as the base material A and providing the inhibition layer D on the surface of the base material A (step $\alpha$) is performed. However, since the surface of the base layer A and the inhibition layer D do not adhere to each other as they are, the UV-curable varnish layer side of the thin paper sheet/UV-curable offset ink layer/UV-curable varnish layer is laminated on a layer produced by subjecting the surface of the base layer A to corona discharge treatment and then coating the surface with a weakly adhesive pressure-sensitive adhesive so as to obtain a material with the following configuration: base layer A/adhesive agent/inhibition layer D/visually recognizable layer C/brittle layer B.

Separately, a step of preparing a release liner, providing a pressure-sensitive adhesive layer E on the release liner, and laminating the brittle layer B and the pressure-sensitive adhesive layer E so that the layers are in contact (step $\delta$) is performed.

As a result, the adhesive force between the inhibition layer D and the visually recognizable layer C can be designed so as to be higher than the adhesive force between the inhibition layer D and the base layer A. When the obtained easily peelable laminate label is peeled after being attached to the adherend, adhesive failure (AF) occurs at the interface between the inhibition layer D and the base layer A in the inhibition layer formation region $A_D$, and the inhibition layer D remains on the adherend side, while the brittle layer B and the visually recognizable layer C are peeled together with the base layer A. Cohesive failure occurs inside the brittle layer B in the inhibition layer non-formation region $A_N$.

Film forming method

The method for forming the base layer A is not particularly limited, and various known methods related to forming methods for thermoplastic resin film may be used. Specific examples include cast forming, in which a molten resin is extruded in a sheet shape using a single layer or multilayer T-die or I-die that is connected to a screw extruder, inflation forming, in which a molten resin is extruded in a tube shape using a circular die and then inflated by the internal air pressure, calendar forming, in which kneaded raw materials are rolled by a plurality of heat rolls to form a sheet shape, roll forming, and the like.

In addition, in the case of the first aspect of the present invention, the brittle layer B may be formed during the process for forming the base layer A. The lamination method for the base layer A and the brittle layer B is also not particularly limited, and various known methods may be used. Specific examples of the forming method for the thermoplastic resin film include a multilayer die method using a feed block or multi-manifold, extrusion lamination method using a plurality of dies, and the like. A combination of a multilayer die method and extrusion lamination method may also be used.

However, to adjust the peel strength of the brittle layer B to a low level, the brittle layer B is preferably formed so as to have the proper void fraction described above.

A brittle layer B having a void fraction within the proper range described above can be produced by stretching a film containing a thermoplastic resin, at least one of an inorganic fine powder and an organic filler, and a dispersant which is added as necessary. When voids are generated in the brittle layer B by stretching, this may be achieved by any of various conventionally used methods or by a combination thereof. As a specific example, when a cast formed film is stretched, machine-direction stretching utilizing the difference in circumferential speeds of a group of rollers, transverse-direction stretching using a tenter oven, sequential biaxial stretching which combines machine-direction stretching and transverse-direction stretching, simultaneous biaxial stretching by a combination of a tenter oven and a linear motor, simultaneous biaxial stretching by a combination of a tenter oven and a pantograph, rolling, and the like can be used. In addition, simultaneous biaxial stretching by a tubular method may be used as the stretching method for an inflation formed film.

The stretching ratio is not particularly limited and is determined appropriately while taking into consideration the characteristics or the like of the thermoplastic resin that is used. For example, when a propylene homopolymer or a copolymer thereof is used as the thermoplastic resin and the material is stretched in one axial direction, the stretching ratio is preferably from 1.2 to 12 times and more preferably from 2 to 10 times. When the material is stretched in two axial directions, the stretching ratio is ordinarily preferably from 1.5 to 60 times and more preferably from 4 to 50 times in terms of the area ratio. When another thermoplastic resin is used and the material is stretched in one axial direction, the stretching ratio is preferably from 1.2 to 10 times and more preferably from 2 to 5 times. When the material is stretched in two axial directions, the stretching ratio is ordinarily preferably from 1.5 to 20 times and more preferably from 4 to 12 times in terms of the area ratio.

The stretching temperature may be set within a known temperature range suitable for the stretching of a thermoplastic resin. Specifically, the temperature is not lower than the glass transition temperature of the thermoplastic resin that is used and is not higher than the melting point of the crystal portion. When the thermoplastic resin is a propylene homopolymer (melting point: 155 to 167°C), the stretching temperature is preferably from 100 to 164°C. When the thermoplastic resin is a high-density polyethylene (melting point: 121 to 134°C), the stretching temperature is preferably from 70 to 133°C. These temperature ranges are temperatures that are from 1 to 70°C lower than the melting points of the thermoplastic resins. Furthermore, when the thermoplastic resin is polyethylene terephthalate (melting point: 246 to 252°C), a temperature that inhibits rapid crystallization is selected.

The stretching rate is preferably from 20 to 350 m/min.

In the case of the first aspect of the present invention, the easily peelable laminate film is formed with the base layer A and the brittle layer B. In the case of a two-layer structure including the base layer A/brittle layer B, possible combinations of the numbers of axes of stretching include uniaxial/uniaxial, uniaxial/biaxial, and biaxial/uniaxial. In addition, the base layer A may have a multilayer structure of two or more layers. Possible combinations of the numbers of axes of stretching in this case include uniaxial/uniaxial/biaxial, uniaxial/biaxial/uniaxial, biaxial/uniaxial/uniaxial, uniaxial/biaxial/biaxial, biaxial/biaxial/uniaxial, and biaxial/biaxial/biaxial in the case of a three-layer structure including a base layer (A2)/base layer (A1)/brittle layer B.

Usage method for easily peelable laminate label

The usage method for the easily peelable laminate label of the present invention includes using the easily peelable laminate label of the present invention so that, when the label is peeled after being attached to an adherend, at least one type of pattern selected from designs, characters, symbols, dots, geometric patterns, and random patterns appears in a portion on the base layer A side from which the label is peeled from the adherend, and an inverted pattern of the pattern of the base layer A side simultaneously appears in a portion remaining on the adherend side.

As a result, it is possible to easily know that the easily peelable laminate label has been peeled from the adherend from the pattern appearing in the portion remaining on the adherend side and the pattern appearing in the portion on the base layer A side. Such a usage method can be easily performed by using the easily peelable laminate label with the configuration of the first aspect, wherein the inhibition layer D is formed with at least one type of pattern selected from designs, characters, symbols, dots, geometric patterns, and random patterns, or the easily peelable laminate label with the configuration of the second aspect, wherein the inhibition layer D is formed with an inverted pattern of at least one type of pattern selected from designs, characters, symbols, dots, geometric patterns, and random patterns.

In addition, another usage method for the easily peelable laminate label of the present invention includes using the easily peelable laminate label of the present invention so that, when the label is peeled after being attached to an adherend, a form of failure according to JIS K6866:1999 is delamination (DF) and/or adhesive failure (AF) at an interface between an inhibition layer D and a layer in contact with the inhibition layer D in a portion where the inhibition layer D is provided (inhibition layer non-formation region $A_N$) and cohesive failure (CSF) of the brittle layer B in a portion where the inhibition layer D is not provided (inhibition layer non-formation region $A_D$).

As a result, when the easily peelable laminate label attached to the adherend is peeled, the visually recognizable layer C is cut with good precision in the thickness direction at a position corresponding to the edge of the inhibition layer D, and mark patterns reflecting the pattern of the inhibition layer D and an inverted pattern thereof appear clearly in the portion on the peeled base layer A side and the portion remaining on the adherend side. The mark pattern that appears makes it possible to easily know that the easily peelable laminate label attached to the adherend has been peeled. This mark pattern preferably includes at least one type of pattern selected from designs, characters, symbols, dots, geometric patterns, and random patterns.

Yet another usage method for the easily peelable laminate label of the present invention includes using the easily peelable laminate label of the present invention so that, when the portion on the base layer A side peeled from the adherend is reattached with a pressure-sensitive adhesive or an adhesive agent to the site from which the label was peeled on the adherend side, at least one type of pattern selected from designs, characters, symbols, dots, geometric patterns, and random patterns appears on the base layer A side.

As a result, it is possible to easily know that the label has been reattached after being peeled from the pattern appearing on the reattached base layer A side. See the sections regarding the First aspect and the Second aspect for the configuration of the easily peelable laminate label used in such a usage method.

At this time, the information visibility after reattachment ($\Delta E_Z$) of the pattern appearing on the reattached base layer A side preferably satisfies condition 3 described above.

Adherend with easily peelable laminate label

The adherend with an easily peelable laminate label according to the present invention is formed by attaching the easily peelable laminate label of the present invention to at least a portion of an adherend surface. An adherend at risk of being reused for the purpose of forgery, opening, or falsification may be suitably used as the adherend. For example, such an adherend may be a packaging container for a drug, a food product, or the like, a postal item, an IC package, a document, a book, or the like. When the adherend is a packaging container, the easily peelable laminate film is preferably attached to an openable location. As a result, the matter of whether the packaging container has been opened can be determined using the mark pattern appearing when the easily peelable laminate film is peeled as an indicator.

Stress at start of peeling

In the case of the adherend with an easily peelable laminate label according to the present invention, the easily peelable laminate label needs to be peeled so that a portion thereof is allowed to remain on the adherend. Therefore, the stress at the start of peeling of the easily peelable laminate label is preferably lower than the cohesive force of the pressure-sensitive adhesive layer E. In addition, the peeling of the easily peelable laminate film from the adherend can preferably be initiated by hand without performing any special processing on the easily peelable laminate label. From these perspectives, the stress at the start of peeling of the adherend with an easily peelable laminate label is preferably not greater than 7.5 N/15 mm and more preferably not greater than 6.0 N/15 mm. On the other hand, from the perspective of preventing the label from being peeled unintentionally in the production process of the easily peelable laminate label or the handling process such as the transport of the adherend with an easily peelable laminate label, the stress at the start of peeling of the adherend with an easily peelable laminate label is preferably higher than the average peel force of the brittle layer B and is preferably not less than 1.0 N/15 mm and more preferably not less than 1.5 N/15 mm. The measurement method for the stress at the start of peeling of the adherend with an easily peelable laminate label includes attaching a test sample prepared in accordance with JIS K6854-2 and attaching the sample to an aluminum plate via a pressure-sensitive adhesive so as to produce a sample for measurement. Using a tensile tester, the stress is measured by a load cell when the test piece is peeled off from the aluminum plate at an angle of 180°, and the maximum value of the stress is used as the stress at the start of peeling.

Opening determination method

The opening determination method of the present invention includes attaching the easily peelable laminate label of the present invention to an openable location of an adherend, assessing as "unopened" a state in which a pattern does not appear on a base layer A side of the easily peelable laminate label, and assessing as "opened" a state in which at least one type of pattern selected from designs, characters, symbols, dots, geometric patterns, and random patterns appears on the base layer A side. The pattern appearing on the base layer A side is preferably one or more types of patterns selected from designs, characters, symbols, dots, geometric patterns, and random patterns. As a result, the matter of whether the adherend has been opened can be easily determined with the naked eye.

Examples

The present invention will be described more specifically below using examples, comparative examples, and test examples. The materials, used amounts, proportions, operations, and the like described below may be varied as appropriate provided that they do not deviate from the spirit of the present invention. Therefore, the scope of the present invention is not limited by the specific examples given below.

Evaluation methods

MFR

The MFR (melt flow rate) of resin compositions a to i were measured in accordance with JIS K7210:1999 under conditions with a temperature of 230°C and a load of 2.16 kg using a small melt indexer (manufactured by Tateyama Kagaku Group, format: L240). The results are shown collectively in Table 1.

Formability

The formability of the easily peelable laminate film was evaluated in the following two categories. The average peel force and opacity are determined by the evaluation methods described below. The results are shown collectively in Table 2.

Good: The appearance is even and uniform, and the average peel force and opacity in the width direction and the flow direction are stable. Here, "stable" means that the measurements at all points of the sample fall within a range of the average value ±5%.
Poor: The appearance is uneven, and the average peel force and opacity in the width direction and the flow direction are unstable.

Thickness

The thickness of the easily peelable laminate film was measured using a thickness meter (manufactured by HyBridge Co., Ltd.) in accordance with JIS K 7130:1999. The easily peelable laminate film was cut in the width direction to a width of 100 mm, and a measurement sample was collected. The thickness of this measurement sample was measured at ten points spaced evenly in the width direction, and the average value thereof was used as the thickness ($\mu$m) of the entire laminate film. The results are shown collectively in Table 2.

The thicknesses of the base layer A and the brittle layer B were measured using a scanning electron microscope (manufactured by Topcon Positioning Systems, Inc., SM-200). A sample for measurement was produced by cutting the easily peelable laminate film using a microtome (RM2265, manufactured by Leica Biosystems), and the film cross section was observed at an acceleration voltage of 10 kV. The thicknesses of the base layer A and the brittle layer B were measured at ten points spaced evenly in the width direction of the observation image, and the average values thereof were used as the measurement for the base layer A and the measurement for the brittle layer B. When the base layer A was a multilayer configuration as well, the measurement of each layer in the base layer A was determined in the same manner as described above.

Next, the thickness ratio of the base layer A and the brittle layer B was determined from the obtained measurements, and the thickness ($\mu$m) of the base layer A and the thickness ($\mu$m) of the brittle layer B were calculated by multiplying the thickness ($\mu$m) of the entire laminate film by the thickness ratio. The results are shown in Table 2.

Opacity

The opacity of the easily peelable laminate film was determined for each sample by bringing a black reference plate or a white reference plate into contact with the back surface of the measurement sample using a color meter (manufactured by Suga Test Instruments Co., Ltd., trade name: Touch Panel Color Computer SM-T) in accordance with JIS P8138 at locations spaced 2 cm from one another in the width direction and the flow direction, measuring the light reflectance of the measurement sample in each state, and calculating a value expressing the ratio of the measurements (black plate/white plate) as a percentage.

Information visibility

On a postal card, 26 letters of alphabet having a character size of 10 point were typed and printed. Next, the easily peelable laminate film was superimposed on the surface on which the alphabet was printed on the postal card so as to produce a sample. The alphabet was visually observed through the easily peelable laminate film, and the information visibility was evaluated using the following four categories. The results are shown collectively in Table 2.

Good: All characters are identifiable.
Moderate: Some characters are identifiable.
Passable: The presence of printing can be observed, but the characters are completely unidentifiable.
Not evaluated (-): The presence of printing is unidentifiable.

Stress at start of peeling

The measurement method for the stress at the start of peeling of the easily peelable laminate label includes first producing a test piece by cutting a location of the easily peelable laminate label not having the inhibition layer D to a width of 15 mm and a length of 120 mm in accordance with JIS K6854-2, producing a gripping margin by attaching wood-free paper having a thickness of 100 $\mu$m, a width of 15 mm, and a length of 200 mm to the top of the pressure-sensitive adhesive, and then producing a sample for measurement by attaching the test piece to an aluminum plate having a width of 25 mm, a length of 210 mm, and a thickness of 1.5 mm via a pressure-sensitive adhesive so that the test piece does not stick out. After this was adjusted in a thermostatic chamber (temperature: 20°C, relative humidity: 65%) environment for 12 hours, the sample was pulled at a tensile test speed of 300 mm/min using a tensile tester (trade name: Autograph, manufactured by Shimadzu Corporation), and the stress was measured by a load cell when the test piece is peeled off from the aluminum plate at an angle of 180°. The maximum value of the stress was used as the stress at the start of peeling. The results are shown collectively in Table 3.

Average peel force

The measurement method for the stress at the start of peeling of the easily peelable laminate label includes first producing a test piece by cutting a location of the easily peelable laminate label not having the inhibition layer D to a width of 15 mm and a length of 120 mm in accordance with JIS K6854-2, producing a gripping margin by attaching wood-free paper having a thickness of 100 $\mu$m, a width of 15 mm, and a length of 200 mm to the top of the pressure-sensitive adhesive, and then producing a sample for measurement by attaching the test piece to an aluminum plate having a width of 25 mm, a length of 210 mm, and a thickness of 1.5 mm via a pressure-sensitive adhesive so that the test piece does not stick out. After this was adjusted in a thermostatic chamber (temperature: 20°C, relative humidity: 65%) environment for 12 hours, the sample is pulled at a tensile test speed of 300 mm/min using a tensile tester (trade name: Autograph, manufactured by Shimadzu Corporation), and the stress was measured by a load cell when the test piece is peeled off from the aluminum plate at an angle of 180°. The average value in a stable peeling state at a peeling distance between 15 mm to 45 mm was used as the average peel force. The results are shown collectively in Table 3.

Initiation property

The easily peelable laminate label was cut into a square shape of 50 mm $\times$ 50 mm and adhered to a postal card via a pressure-sensitive adhesive layer after the release liner was peeled off. This was used as a sample for evaluating peelability.
One side of the four sides of the easily peelable laminate label (easily peelable laminate film/pressure-sensitive adhesive layer) on the sample was held by hand and peeled off from the postal card. The state of the label until stable peeling started in the brittle layer B (distance from the label edge) was observed and evaluated using the following four categories. Here, the phrase "stable peeling" means that peeling occurs at a roughly constant rate without jumping during peeling and without the peel force falling to zero. The results are shown collectively in Table 3.

Good: Stable peeling starts in less than 2 mm.
Moderate: 2 mm or longer but shorter than 5 mm is required to start stable peeling.
Passable: 5 mm or longer but shorter than 10 mm is required to start stable peeling.
Poor: 10 mm or longer is required to start stable peeling.

Propagativity

On one side of the four sides of the easily peelable laminate label of the sample described above, pressure-sensitive adhesive tape (trade name: Cellotape CT-18 (trade name, manufactured by Nichiban Co., Ltd.) was adhered in an overlapping manner to establish a state in which the sample was easily held by hand and peeling of brittle layer B was easily started. Then, the brittle layer B was peeled from the postal card by hand, and the peeling force of the brittle layer B at this time was evaluated based on the load applied to the hand and based on the visual observation of the propagation of peeling of the brittle layer B. Each evaluation was made with the following four categories. The results are shown collectively in Table 3.

Good: The peeling force is light, and peeling propagates to the entire surface successfully.
Moderate: The peeling force is slightly heavy, but peeling propagates to the entire surface successfully.
Passable: The peeling force is heavy, but peeling propagates to the entire surface successfully.
Poor: The peeling force is very heavy, and peeling does not propagate to the entire surface.

Location and form of failure

The easily peelable laminate label was cut into a shape of 30 mm wide by 120 mm long, and after the release liner was peeled off, the label was attached to a PET film via a pressure-sensitive adhesive layer and used as a sample for evaluating peelability.
The locations and forms of failures according to JIS K6866:1999 occurring in the portion where the inhibition layer D is not provided, the portion where the inhibition layer D having a simple graphical pattern is provided, and the portion where the inhibition layer D having a character pattern is provided when the easily peelable laminate label was subjected to 180° peeling according to JIS K6854-2:1999 are shown collectively in Table 3.

Sharpness

The sharpness was evaluated by visually observing the failure of the brittle layer B and the cutting state of the visually recognizable layer C at the time of peeling for the portion where the inhibition layer D having a simple graphical pattern is provided and the portion where the inhibition layer D having a character pattern is provided, which were used in the evaluation of the failure form. This evaluation was made with the following four categories. The results are shown collectively in Table 3.

Good: The cutting of the visually recognizable layer C is in accordance with the pattern of the inhibition layer D, and the reproducibility is high. A simple graphical pattern and a character pattern can be read instantly.
Moderate: The cutting of the visually recognizable layer C is roughly in accordance with the pattern of the inhibition layer D, a simple graphical pattern and a character pattern can be read.
Passable: The cutting of the visually recognizable layer C is not in accordance with the pattern of the inhibition layer D, and there are gaps and missing parts. A simple graphical pattern or character pattern cannot be read correctly.
Poor: The cutting of the visually recognizable layer C does not occur, and a simple graphical pattern or character pattern cannot be confirmed.

Information visibility prior to peeling

The easily peelable laminate label produced in the examples was cut into a square shape of 100 mm $\times$ 100 mm, and after the release liner was peeled off, the label was attached to a white PET film (Teijin Tetoron Film U2, manufactured by Teijin Du Pont Film Co., Ltd.) via a pressure-sensitive adhesive layer E and used as a sample for evaluating visibility. The L-value, a-value, and b-value of the portion X1 where the inhibition layer D is provided (inhibition layer formation region $A_D$) and the portion X2 where the inhibition layer D is not provided (inhibition layer non-formation region $A_N$) were measured under conditions with a light source of D50 and a viewing angle of 2° using a spectrophotometer (trade name: X-Rite530, manufactured by X-RITE), and the color difference was expressed as $\Delta E_X$ based on the following equation. The results are shown collectively in Table 3.

[Equation 4]

$$\Delta E_X = \sqrt{(L_{X1} - L_{X2})^2 + (a_{X1} - a_{X2})^2 + (b_{X1} - b_{X2})^2}$$

In the equation above, $L_{X1}$ is the L-value measured in the portion where the inhibition layer D is provided (X1); $L_{X2}$ is the L-value measured in the portion where the inhibition layer D is not provided (X2); $a_{X1}$ is the a-value measured in the portion where the inhibition layer D is provided (X1); $a_{X2}$ is the a-value measured in the portion where the inhibition layer D is not provided (X2); $b_{X1}$ is the b-value of the portion where the inhibition layer D is provided (X1); and $b_{X2}$ is the b-value of the portion where the inhibition layer D is not provided (X2).

Next, the concentration difference between the portion where the inhibition layer D is provided (X1) and the portion where the inhibition layer D is not provided (X2) was assessed visually. The assessment criteria were as follows, wherein the "good", "moderate", and "passable" levels are considered passing. The results are shown collectively in Table 3.

Good: A difference in concentration cannot be confirmed visually.
Moderate: A difference in concentration can be confirmed by staring at the sample.
Passable: A difference in concentration can be confirmed visually, and the pattern of the inhibition layer D can be faintly confirmed.
Poor: A difference in concentration is clear, and the pattern of the inhibition layer D can be confirmed instantly.

Superimposition information visibility after peeling

The easily peelable laminate label was cut into a square shape of 100 mm × 100 mm, and after the release liner was peeled off, the label was attached to a white PET film (Teijin[R] Tetoron[R] Film U2, manufactured by Teijin Du Pont Film Co., Ltd.) via a pressure-sensitive adhesive layer, peeled, superimposed once again, and used as a sample for evaluating visibility. The L-value, $\alpha$-value, and b-value of the portion of the sample where the inhibition layer D is provided (Y1) (inhibition layer formation region $A_D$) and the portion where the inhibition layer D is not provided (Y2) (inhibition layer non-formation region $A_N$) were measured under the same conditions as in the information visibility test prior to peeling, and the color difference was expressed as $\Delta E_Y$ based on the following equation. The results are shown collectively in Table 3.

[Equation 5]

$$\Delta E_Y = \sqrt{(L_{Y1} - L_{Y2})^2 + (a_{Y1} - a_{Y2})^2 + (b_{Y1} - b_{Y2})^2}$$

In the equation above, $L_{Y1}$ is the L-value measured in the portion where the inhibition layer D is provided (Y1); $L_{Y2}$ is the L-value measured in the portion where the inhibition layer D is not provided (Y2); $a_{Y1}$ is the a-value measured in the portion where the inhibition layer D is provided (Y1); $a_{Y2}$ is the a-value measured in the portion where the inhibition layer D is not provided (Y2); $b_{Y1}$ is the b-value of the portion where the inhibition layer D is provided (Y1); and $b_{Y2}$ is the b-value of the portion where the inhibition layer D is not provided (Y2).

Next, the concentration difference between the portion where the inhibition layer D is provided (Y1) and the portion where the inhibition layer D is not provided (Y2) was assessed visually. The assessment criteria were as follows, wherein the "good", "moderate", and "passable" levels are considered passing. The results are shown collectively in Table 3.

Good: A difference in concentration is clear, and peeling can be observed immediately.
Moderate: A difference in concentration can be confirmed visually, and peeling can be observed.
Passable: A difference in concentration can be confirmed by staring at the sample.
Poor: A difference in concentration cannot be confirmed visually.

Information visibility after reattachment

The sample used for the superimposition information visibility after peeling described above was used, and the sample was reattached to the peeling surface on the label side using PVA glue (Arabic Yamato, manufactured by YAMATO Co.,Ltd.) to prepare a sample for evaluating visibility. The L-value, $\alpha$-value, and b-value of the portion of the sample where the inhibition layer D is provided (Z1) (inhibition layer formation region $A_D$) and the portion where the inhibition layer D is not provided (Z2) (inhibition layer non-formation region $A_N$) were measured under the same conditions as in the information visibility test prior to peeling, and the color difference was expressed as $\Delta E_Z$ based on the following equation. The results are shown collectively in Table 3.

[Equation 6]

$$\Delta E_Z = \sqrt{(L_{Z1} - L_{Z2})^2 + (a_{Z1} - a_{Z2})^2 + (b_{Z1} - b_{Z2})^2}$$

In the equation above, $L_{Z1}$ is the L-value measured in the portion where the inhibition layer D is provided (Z1); $L_{Z2}$ is the L-value measured in the portion where the inhibition layer D is not provided (Z2); $a_{Z1}$ is the a-value measured in the portion where the inhibition layer D is provided (Z1); $a_{Z2}$ is the a-value measured in the portion where the inhibition layer D is not provided (Z2); $b_{Z1}$ is the b-value of the portion where the inhibition layer D is provided (Z1); and $b_{Z2}$ is the b-value of the portion where the inhibition layer D is not provided (Z2).

Next, the concentration difference between the portion X1 where the inhibition layer D is provided and the portion X2 where the inhibition layer D is not provided was assessed visually. The assessment criteria were as follows, wherein the "good", "moderate", and "passable" levels are considered passing. The results are shown collectively in Table 3.

Good: A difference in concentration is clear, and peeling can be observed immediately.
Moderate: A difference in concentration can be confirmed visually, and peeling can be observed.
Passable: A difference in concentration can be confirmed by staring at the sample.
Poor: A difference in concentration cannot be confirmed visually.

Production of thermoplastic resin film

Production Example 1

A resin composition h was used for the base layer A and a resin composition a was used for the brittle layer B, and these were each separately melt-kneaded in an extruder (PM-115, manufactured by Mitsubishi Heavy Industries, Ltd.) set at 230°C. Thereafter, the melt-kneaded materials were fed to a coextrusion die set at 250°C and laminated in the die, and this was extruded in a sheet-shape. The extruded material was cooled using a cooling device to obtain an unstretched sheet having a two-layer structure. This unstretched sheet was heated to 130°C and stretched 4 times in the machine direction utilizing the difference in circumferential speeds of rolls. After the sheet was cooled to a temperature of 60°C, the sheet was heated again to a temperature of 150°C, stretched 9 times in the transverse direction using a tenter, and then subjected to annealing treatment at a temperature of 162°C. After the sheet was cooled to a temperature of 60°C, edges of the sheet were slit to obtain a multilayer stretched film having a thickness of 60 $\mu$m and having a two-layer structure (A/B, thickness of each layer: 59 $\mu$m/1 $\mu$m, number of axes of stretching in each layer: biaxial/biaxial). This was used as the easily peelable laminate film. The opacity of the easily peelable laminate film obtained was 33%, and the information visibility was "Good".

Production Examples 2 to 4, 8 to 12, and 15 to 18

A multilayer stretched film was obtained in the same manner as in Production Example 1 with the exception that the resin compositions shown in Table 2 were used for the base layer A and the brittle layer B in Production Example 1 and that the thicknesses of the base layer A and the brittle layer B were changed to the thicknesses shown in Table 2 and this was used as an easily peelable laminate film.

The opacity and information visibility of the easily peelable laminate film obtained are shown in Table 2. Note that the easily peelable laminate films of Production Examples 10 and 12 were opaque, so the information visibility was not evaluated. In addition, the brittle layer B of the easily peelable laminate film of Production Example 16 did not spread out uniformly and was uneven, so the thickness of the base layer A, the thickness of the brittle layer B, the opacity, and the information visibility were not evaluated.

Production Example 5

A multilayer stretched film having a thickness of 52 $\mu$m and having a two-layer structure (A/B, thickness of each layer: 50 $\mu$m/2 $\mu$m, number of axes stretching in each layer: biaxial/0 axes) was obtained by applying a coating solution of a resin composition j as a brittle layer B to one side of a biaxially stretched polyethylene terephthalate film (manufactured by Daikyo Co., Ltd., thickness: 50 $\mu$m) with a bar coater to a dry thickness of 2 $\mu$m and drying the coating solution, and this was used as an easily peelable laminate film. The opacity of the easily peelable laminate film obtained was 45%, and the information visibility was "Moderate".

Production Example 6

A resin composition h was used for the base layer A, and this was melt-kneaded in an extruder set at 230°C. Thereafter, the melt-kneaded material was fed to an extrusion die set at 250°C and extruded in a sheet-shape in the die. The extruded material was cooled using a cooling device to obtain an unstretched sheet. This unstretched sheet was heated to 130°C and stretched 4 times in the machine direction utilizing the difference in circumferential speeds of rolls. The sheet was heated to a temperature of 150°C, stretched 9 times in the transverse direction using a tenter, subjected to annealing treatment at a temperature of 162°C, and then cooled to a temperature of 60°C to produce a biaxially stretched sheet.

Separately, a resin composition k was used for the brittle layer B, and after this was kneaded in an extruder set at 250°C, the kneaded material was fed to a T-die set at 250°C and extruded from the T-die in a sheet shape. The sheet was laminated on one side of the biaxially stretched sheet obtained in the process described above. After the sheet was cooled to 60°C, the edges of the sheet were slit to obtain a multilayer stretched film having a thickness of 54 $\mu$m and having a two-layer structure (A/B, thickness of each layer: 50 $\mu$m/4 $\mu$m, number of axes of stretching in each layer: biaxial/0 axes), and this was used as an easily peelable laminate film. The opacity of the easily peelable laminate film obtained was 65%, and the information visibility was "Moderate".

Production Example 7

A resin composition h was used for the base layer A, and this was melt-kneaded in an extruder set at 230°C. Thereafter, the melt-kneaded material was fed to an extrusion die set at 250°C and extruded in a sheet-shape in the die. The extruded material was cooled using a cooling device to obtain an unstretched sheet. This unstretched sheet was heated to 130°C, stretched 4 times in the machine direction utilizing the difference in circumferential speeds of rolls, and then cooled to a temperature of 60°C to obtain a uniaxially stretched sheet.

Separately, a resin composition d was used for the brittle layer B, and after this was kneaded in an extruder set at 250°C, the kneaded material was fed to a T-die set at 250°C and extruded from the T-die in a sheet shape. The sheet was laminated on one side of the uniaxially stretched sheet obtained in the process described above. The sheet was then cooled to 60°C to obtain a two-type, two-layer laminate sheet including the base layer A/brittle layer B (resin composition h/resin composition d).

Next, the two-type, two-layer laminate sheet obtained in the process described above was once again heated to a temperature of 150°C and stretched 9 times in the transverse direction using a tenter, and then subjected to annealing treatment at a temperature of 162°C. After the sheet was cooled to a temperature of 60°C, the edges of the sheet were slit to obtain a multilayer stretched film having a thickness of 60 $\mu$m and having a two-layer structure (A/B, thickness of each layer: 59 $\mu$m/1 $\mu$m, number of axes of stretching in each layer: biaxial/uniaxial), and this was used as an easily peelable laminate film. The opacity of the easily peelable laminate film obtained was 52%, and the information visibility was Moderate.

Production Example 13

A resin composition h was used for the base layer A1 and a resin composition g was used for the brittle layer B, and these were each separately melt-kneaded in an extruder (PM-115, manufactured by Mitsubishi Heavy Industries, Ltd.) set at 230°C. Thereafter, the melt-kneaded materials were fed to a coextrusion die set at 250°C and laminated in the die, and this was extruded in a sheet-shape. The extruded material was cooled using a cooling device to obtain an unstretched sheet having a two-layer structure. This unstretched sheet was heated to 130°C, stretched 4 times in the machine direction utilizing the difference in circumferential speeds of rolls, and then cooled to a temperature of 60°C to obtain a uniaxially stretched sheet.

Separately, a resin composition g was used for the base layer A2, and after this was kneaded in an extruder set at 250°C, the kneaded material was fed to a T-die set at 250°C and extruded from the T-die in a sheet shape. The sheet was laminated so as to be in contact with the surface of the base layer A1 of the uniaxially stretched sheet obtained in the process described above. The sheet was then cooled to 60°C to obtain a two-type, three-layer laminate sheet including the base layer A2/base layer A1/brittle layer B (resin composition g/resin composition h/resin composition g).

Next, the laminate film having a two-type, three-layer structure obtained in the process described above was once again heated to a temperature of 150°C, stretched 9 times in the transverse direction using a tenter, and then subjected to annealing treatment at a temperature of 162°C. After the sheet was cooled to a temperature of 60°C, the edges of the sheet were slit to obtain a multilayer stretched film having a thickness of 60 $\mu$m and having a three-layer structure (A2/A1/B, thickness of each layer: 2 $\mu$m/57.4 $\mu$m/0.6 $\mu$m, number of axes of stretching in each layer: uniaxial/biaxial/biaxial), and this was used as an easily peelable laminate film. The opacity of the easily peelable laminate film obtained was 53%, and the information visibility was "Moderate".

[Table 1]

| | | | | Resin composition Compounding ratio (wt.%) | | | | | | | | | | |
|---|---|---|---|---|---|---|---|---|---|---|---|---|---|---|
| | | | | a | b | c | d | e | f | g | h | i | j | k |
| Name of raw material | Thermoplastic resin | Propylene homopolymer | Trade name: NOVATEC-PP FY6Q, manufactured by Japan Polypropylene Corporation MFR: 2.4 g/10 min (230°C, 2.16 kg load) Melting point: 164°C (DSC peak temperature) | 1.6 | 48 | 55 | - | - | 60 | 40 | 70 | 50 | - | 48 |
| | | Propylene homopolymer | Trade name: NOVATEC-PP MA3Q, manufactured by Japan Polypropylene Corporation MFR: 9.2 g/10 min (230°C, 2.16 kg load) Melting point: 165°C (DSC peak temperature) | 52.4 | 16 | 21 | - | - | 14.5 | 10 | 17.5 | 50 | - | 48 |
| | | Propylene homopolymer | Trade name: NOVATEC-PP MA1Q, manufactured by Japan Polypropylene Corporation MFR: 18.5 g/10 min (230°C, 2.16 kg load) Melting point: 165°C (DSC peak temperature) | - | - | - | 24 | 19 | - | - | - | - | - | - |
| | | High-density polyethylene | Trade name: NOVATEC-HD HJ360, manufactured by Japan Polyethylene Corporation MFR: 5.5 g/10 min (190°C, 2.16 kg load) Melting point: 132°C (DSC peak temperature) | - | - | - | - | - | 10 | - | 10 | - | - | - |
| | | Acrylonitrile-styrcne copolymer resin | Trade name: Litac 120PCF, Manufactured by Nippon A&L Inc. Solid content: 100% | - | - | - | - | - | - | - | - | - | 11.5 | - |

34

(continued)

| | | | a | b | c | d | e | f | g | h | i | j | k |
|---|---|---|---|---|---|---|---|---|---|---|---|---|---|
| | | | Resin composition Compounding ratio (wt.%) | | | | | | | | | | |
| Inorganic fine powder | Heavy calcium carbonate | Trade name: Softon 1800, manufactured by Bihoku Funka Kogyo Co., Ltd., Dry pulverized and classified product Average particle size: 1.2 μm (median diameter) | 45 | 35 | 23 | 75 | 80 | 15.5 | - | 2.5 | - | - | - |
| | | Trade name: Calfine YM23, Manufactured by Maruo Calcium Co., Ltd. Average particle size: 0.2 μm (median diameter) | - | - | - | - | - | - | 49 | - | - | 50.5 | - |
| Dispersant | Maleic acid-modified polypropylene | Trade name: YUMEX 1001, manufactured by Sanyo Chemical Industries, Ltd. Acid modification ratio: 5% Softening point: 154°C | 1 | 1 | 1 | 1 | 1 | - | 1 | - | - | - | - |
| Solvent | Dimethylformamide | Manufactured by Wako Pure Chemical Industries, Ltd., Solid content: 0% | - | - | - | - | - | - | - | - | - | - | - |
| Foaming agent | Inorganic dispersion foaming agent | Trade name: Cellborn CS-P, manufactured by Eiwa Chemical Industries, Co., Ltd. Main component: sodium hydrogen carbonate | - | - | - | - | - | - | - | - | - | 38 | 4 |
| Physical propertie | MFR [g/10 min (230°C 2.16 kg load)] | | 6.5 | 4.1 | 4.1 | 3.0 | 0.2 | 4.1 | 5.0 | 3.5 | 5.0 | - | - |

Table 2

| | Composition | | | | | Production | | | Easily peelable laminate film | | | | |
| | Base layer A | | Brittle layer B | | | Structure of number of axes of stretching | | | Thickness (μm) | | | | |
| | Thermoplastic resin composi-tion (A1/A2/A3) | Inorganic fine pow-der con-tent (%) | Thermoplastic resin composi-tion | Inorganic fine pow-der aver-age vol-ume (μm) | Inorganic fine pow-der con-tent (%) | Base layer A (A1/A2/A3) | Brittle layer B | Formability | Total | Brittle layer B | Base layer A (A1/A2/A3) | Opacity (%) | Information visibility |
|---|---|---|---|---|---|---|---|---|---|---|---|---|---|
| Production Example 1 | h | 2.5 | a | 1.2 | 45 | Biaxial | Biaxial | Moderate | 60 | 1 | 59 | 33 | Good |
| Production Example 2 | h | 2.5 | c | 1.2 | 23 | Biaxial | Biaxial | Moderate | 60 | 1 | 59 | 28 | Good |
| Production Example 3 | h | 2.5 | b | 1.2 | 35 | Biaxial | Biaxial | Moderate | 60 | 1 | 59 | 30 | Good |
| Production Example 4 | h | 2.5 | d | 1.2 | 75 | Biaxial | Biaxial | Moderate | 60 | 1 | 59 | 55 | Moderate |
| Production Example 5 | PET | 0 | j | 0.2 | 80 | Biaxial | 0 axes | Moderate | 52 | 2 | 50 | 45 | Moderate |
| Production Example 6 | h | 2.5 | k | - | 0 | Biaxial | 0 axes | Moderate | 54 | 4 | 50 | 65 | Moderate |
| Production Example 7 | h | 2.5 | d | 1.2 | 75 | Biaxial | Uniaxial | Moderate | 60 | 1 | 59 | 52 | Moderate |
| Production Example 8 | h | 2.5 | g | 0.2 | 49 | Biaxial | Biaxial | Moderate | 59.2 | 0.2 | 59 | 19 | Good |
| Production Example 9 | h | 2.5 | a | 1.2 | 45 | Biaxial | Biaxial | Moderate | 67 | 8 | 59 | 58 | Moderate |
| Production Example 10 | h | 2.5 | a | 1.2 | 45 | Biaxial | Biaxial | Moderate | 74 | 15 | 59 | 80 | - |
| Production Example 11 | i | 0 | a | 1.2 | 45 | Biaxial | Biaxial | Moderate | 60 | 1 | 59 | 25 | Good |
| Production Example 12 | f | 15.5 | a | 1.2 | 45 | Biaxial | Biaxial | Moderate | 60 | 1 | 59 | 82 | - |

(continued)

| | Composition | | | | | Production | | | Easily peelable laminate film | | | | |
| | Base layer A | | Brittle layer B | | | Structure of number of axes of stretching | | | Thickness (μm) | | | Opacity (%) | Information visibility |
| | Thermoplastic resin composition (A1/A2/A3) | Inorganic fine powder content (%) | Thermoplastic resin composition | Inorganic fine powder average volume (μm) | Inorganic fine powder content (%) | Base layer A (A1/A2/A3) | Brittle layer B | Formability | Total | Brittle layer B | Base layer A (A1/A2/A3) | | |
|---|---|---|---|---|---|---|---|---|---|---|---|---|---|
| Production Example 13 | h/g | 2.5/49 | g | 0.2 | 49 | Biaxial/ uniaxi al | Biaxial | Moderate | 60 | 0.6 | 57.4/2 | 53 | Moderate |
| Production Example 14 | h/kneading adhesive agent/PET | 2.5/0/0 | a | 1.2 | 45 | Biaxial/0 axes/biaxial | Biaxial | Moderate | 400 | 1 | 59/40/300 | 50 | Moderate |
| Production Example 15 | h | 2.5 | f | 1.2 | 16 | Biaxial | Biaxial | Moderate | 60 | 1 | 59 | 22 | Good |
| Production Example 16 | h | 2.5 | e | 1.2 | 80 | Biaxial | Biaxial | Poor | 60 | - | - | - | - |
| Production Example 17 | h | 2.5 | a | 1.2 | 45 | Biaxial | Biaxial | Moderate | 84 | 25 | 59 | 85 | Poor |
| Production Example 18 | h | 2.5 | g | 0.2 | 49 | Biaxial | Biaxial | Moderate | 59.05 | 0.05 | 59 | 9 | Good |

Production Example 14

A solvent-type acrylic pressure-sensitive adhesive (Olibain BPS 1109, manufactured by Toyo Ink Co., Ltd.) was applied as a base layer A2 to one side of a biaxially stretched polyethylene terephthalate film (manufactured by Daikyo Co., Ltd., thickness: 300 $\mu$m) as a base layer A3 with a comma coater to a dry thickness of 40 $\mu$m, and this was dried to obtain a laminate sheet.

Next, the laminate sheet described above and the easily peelable laminate film produced in Production Example 1 were laminated so that the base layer A1 surface of the easily peelable laminate film and the A2 surface of the laminate film were in contact with each other, and a multilayer stretched film having a thickness of 400 $\mu$m and having a four-layer structure (A3/A2/A1/B, thickness of each layer: 300 $\mu$m/40 $\mu$m/59 $\mu$m/1 $\mu$m, number of axes of stretching in each layer: biaxial/0 axes/biaxial/biaxial) was thereby obtained. This was used as an easily peelable laminate film. The opacity of the easily peelable laminate film obtained was 50%, and the information visibility was "Moderate".

Example 1

Using a 1.5 g/m$^2$ of a mixture containing a UV ink (UV 161 Indigo S, manufactured by T&K TOKA Corporation) and a flexo ink (UV Flexo Indigo 500, manufactured by T&K TOKA Corporation) with a weight ratio of 4:1 as the visually recognizable layer C, a solid pattern was printed so that the visually recognizable layer C was in contact with the brittle layer B of the easily peelable laminate film produced in Production Example 1. The visually recognizable layer C was then cured by UV irradiation to obtain a laminate in which the base layer A/brittle layer B/visually recognizable layer C were laminated in this order.

Next, using 1.5 g/m$^2$ of a mixture containing a cation curable UV silicone resin (UV POLY200, manufactured by Arakawa Chemical Industries, Co., Ltd.) and a boron-based cation curable UV catalyst (UV CATA211, manufactured by Arakawa Chemical Industries, Co., Ltd.) with a weight ratio of 50:1 as the inhibition layer D, the characters "OPEN" in a 30 pt. Arial Black font as a character pattern and the symbol "x" in a 130 pt. Arial Black font as a simple graphical pattern were printed so that the inhibition layer D was in contact with the visually recognizable layer C of the laminate described above. The inhibition layer D was then cured by UV irradiation to obtain a laminate in which the base layer A/brittle layer B/visually recognizable layer C/inhibition layer D were laminated in this order.

Separately, a solvent-type acrylic pressure-sensitive adhesive (Olibain BPS1109, manufactured by Toyo Ink Co., Ltd.) was applied as an adhesive layer E with a comma coater in a dried coating amount of 30 g/m$^2$ to the silicone-treated surface of a release liner having a thickness of 173 $\mu$m and a density of 0.9 g/m$^3$, which was prepared by laminating a polyethylene film on both sides of wood-free paper and performing silicone treatment on one side thereof, and this was dried to obtain a pressure-sensitive adhesive sheet.

Next, the adhesive layer E of the pressure-sensitive adhesive sheet described above and the inhibition layer D of the laminate described above were laminated in contact with each other to obtain a peelable laminate label in which the base layer A/brittle layer B/visually recognizable layer C/inhibition layer D/pressure-sensitive adhesive layer E/release liner were laminated in this order.

The peeling suitability (stress at the start of peeling, average peel force, initiation properties, propagativity, and location and form of failure) of the label in the portion where the inhibition layer D is not provided, the pattern peeling suitability (location and form of failure and the sharpness in the portion where the inhibition layer D is provided), and security performance (information visibility prior to peeling, superimposition information visibility after peeling, and information visibility after reattachment) were evaluated, and the results are shown collectively in Table 3. The peeling state of the character pattern part is illustrated in FIG. 6.

Example 2

Using a 1.5 g/m$^2$ of a mixture containing a UV ink (UV 161 Indigo S, manufactured by T&K TOKA Corporation) and a flexo ink (UV Flexo Indigo 500, manufactured by T&K TOKA Corporation) with a weight ratio of 4:1 as the visually recognizable layer C, a solid pattern was printed so that the visually recognizable layer C was in contact with the brittle layer B of the easily peelable laminate film produced in Production Example 1. The visually recognizable layer C was then cured by UV irradiation to obtain a laminate in which the base layer A/brittle layer B/visually recognizable layer C were laminated in this order.

Separately, a solvent-type acrylic pressure-sensitive adhesive (Olibain BPS1109, manufactured by Toyo Ink Co., Ltd.) was applied as an adhesive layer E with a comma coater in a dried coating amount of 30 g/m$^2$ to the silicone-treated surface of a release liner having a thickness of 173 $\mu$m and a density of 0.9 g/m$^3$, which was prepared by laminating a polyethylene film on both sides of wood-free paper and performing silicone treatment on one side thereof, and this was dried to obtain a pressure-sensitive adhesive sheet.

Next, using 1.5 g/m$^2$ of a mixture containing a cation curable UV silicone resin (UV POLY200, manufactured by Arakawa Chemical Industries, Co., Ltd.) and a boron-based cation curable UV catalyst (UV CATA211, manufactured by Arakawa Chemical Industries, Co., Ltd.) with a weight ratio of 50:1 as the inhibition layer D, the same pattern as in Example 1 was printed. The inhibition layer D was then cured by UV irradiation to obtain a pressure-sensitive adhesive sheet in which the inhibition layer D/pressure-sensitive adhesive layer E/release liner were laminated in this order.

Next, the inhibition layer D of the pressure-sensitive adhesive sheet described above and the visually recognizable layer C of the laminate described above were laminated in contact with each other to obtain a peelable laminate label in which the base layer A/brittle layer B/visually recognizable layer C/inhibition layer D/pressure-sensitive adhesive layer E/release liner were laminated in this order.

The peeling suitability, pattern peeling suitability, and security performance of the label in the portion where the inhibition layer D was not provided were evaluated in the same manner as in Example 1, and the results are shown collectively in Table 3.

Example 3

Using a 1.5 g/m$^2$ of a mixture containing a cation curable UV silicone resin (UV POLY200, manufactured by Arakawa Chemical Industries, Co., Ltd.) and a boron-based cation curable UV catalyst (UV CATA211, manufactured by Arakawa Chemical Industries, Co., Ltd.) with a weight ratio of 50:1 as the inhibition layer D, the same pattern as in Example 1 was printed on one side of a biaxially stretched polyethylene terephthalate film (manufactured by Daikyo Co., Ltd., thickness: 50 μm) as the base layer A. The inhibition layer D was then cured by UV irradiation to obtain a laminate in which the base layer A/inhibition layer D were laminated in this order.

Next, using 1.5 g/m$^2$ of a mixture containing a UV ink (UV 161 Indigo S, manufactured by T&K TOKA Corporation) and a flexo ink (UV Flexo Indigo 500, manufactured by T&K TOKA Corporation) with a weight ratio of 4:1 as the visually recognizable layer C, a solid pattern was printed so that the visually recognizable layer C was in contact with the inhibition layer D of the laminate described above. The visually recognizable layer C was then cured by UV irradiation to obtain a laminate in which the base layer A/inhibition layer D/visually recognizable layer C were laminated in this order.

Next, a coating solution of a resin composition j was applied with a bar coater as the brittle layer B to a dried thickness of 2 μm in contact with the visually recognizable layer C of the laminate described above so as to obtain a laminate in which the base layer A/inhibition layer D/visually recognizable layer C/brittle layer B were laminated in this order.

Separately, a solvent-type acrylic pressure-sensitive adhesive (Olibain BPS1109, manufactured by Toyo Ink Co., Ltd.) was applied as an adhesive layer E with a comma coater in a dried coating amount of 30 g/m$^2$ to the silicone-treated surface of a release liner having a thickness of 173 μm and a density of 0.9 g/m$^3$, which was prepared by laminating a polyethylene film on both sides of wood-free paper and performing silicone treatment on one side thereof, and this was dried to obtain a pressure-sensitive adhesive sheet.

Next, the adhesive layer E of the pressure-sensitive adhesive sheet described above and the brittle layer B of the laminate described above were laminated in contact with each other to obtain a peelable laminate label in which the base layer A/inhibition layer D/visually recognizable layer C/brittle layer B/pressure-sensitive adhesive layer E/release liner were laminated in this order.

The peeling suitability, pattern peeling suitability, and security performance of the label in the portion where the inhibition layer D was not provided were evaluated in the same manner as in Example 1, and the results are shown collectively in Table 3. In addition, the state of the character pattern part prior to peeling, the peeling state, the superimposed state after peeling, and the reattachment state after peeling are illustrated in FIG. 6.

Examples 4 to 16 and Comparative Examples 2 to 5

A peelable laminate label in which the base layer A/brittle layer B/visually recognizable layer C/inhibition layer D/pressure-sensitive adhesive layer E/release liner were laminated in this order was obtained in the same manner as in Production Example 1 with the exception that the easily peelable laminate film in Example 1 was changed to the production example shown in Table 3.

The peeling suitability, pattern peeling suitability, and security performance of the label in the portion where the inhibition layer D was not provided were evaluated in the same manner as in Example 1, and the results are shown collectively in Table 3.

Comparative Example 1

Using 1.5 g/m$^2$ of a mixture containing a UV ink (UV 161 Indigo S, manufactured by T&K TOKA Corporation) and a flexo ink (UV Flexo Indigo 500, manufactured by T&K TOKA Corporation) with a weight ratio of 4:1 as the visually recognizable layer C, a solid pattern was printed so that the visually recognizable layer C was in contact with the brittle layer B of the easily peelable laminate film produced in Production Example 1. The visually recognizable layer C was then cured by UV irradiation to obtain a laminate in which the base layer A/brittle layer B/visually recognizable layer C were laminated in this order.

Separately, a solvent-type acrylic pressure-sensitive adhesive (Olibain BPS1109, manufactured by Toyo Ink Co., Ltd.) was applied as an adhesive layer E with a comma coater in a dried coating amount of 30 g/m$^2$ to the silicone-treated surface of a release liner having a thickness of 173 $\mu$m and a density of 0.9 g/m$^3$, which was prepared by laminating a polyethylene film on both sides of wood-free paper and performing silicone treatment on one side thereof, and this was dried to obtain a pressure-sensitive adhesive sheet.

Next, the adhesive layer E of the pressure-sensitive adhesive sheet described above and the visually recognizable layer C of the laminate described above were laminated in contact with each other to obtain a laminate in which the base layer A/brittle layer B/visually recognizable layer C/pressure-sensitive adhesive layer E/release liner were laminated in this order.

Next, the release liner of the laminate described above was peeled, and using 1.5 g/m$^2$ of a mixture containing a cation curable UV silicone resin (UV POLY200, manufactured by Arakawa Chemical Industries, Co., Ltd.) and a boron-based cation curable UV catalyst (UV CATA211, manufactured by Arakawa Chemical Industries, Co., Ltd.) with a weight ratio of 50:1 as the inhibition layer D, the same pattern as in Example 1 was printed so that the inhibition layer D was in contact with the pressure-sensitive adhesive layer E of the laminate. The inhibition layer D was cured by UV irradiation, and the release liner was laminated in contact with the inhibition layer D to obtain a peelable laminate label in which the base layer A/brittle layer B/visually recognizable layer C/pressure-sensitive adhesive layer E/inhibition layer D/release liner were laminated in this order.

The peeling suitability, pattern peeling suitability, and security performance of the label in the portion where the inhibition layer D was not provided were evaluated in the same manner as in Example 1, and the results are shown collectively in Table 3. In addition, the peeling state of the simple graphical pattern and the character pattern part is shown in FIG. 3.

Example 17

A peelable laminate label in which the base layer A/brittle layer B/visually recognizable layer C/inhibition layer D/pressure-sensitive adhesive layer E/release liner were laminated in this order was obtained in the same manner as in Production Example 1 with the exception that the visually recognizable layer C in Example 1 was changed to the outlined characters "Do Not Open" in a 40 pt. HGP Gothic E font as a character pattern.

After the release liner of the label described above was peeled, the release liner was attached to a white PET film (Teijin Tetoron Film U2, manufactured by Teijin Du Pont Film Co., Ltd.) as an adherend via the pressure-sensitive adhesive layer E. When the release liner was then peeled, the character pattern of the printing agent layer C was not readable in the shape of the characters "Do Not Open", and it was thereby confirmed that the label had been peeled.

When the peeled surface was observed, the character pattern of the visually recognizable layer C had failed along the pattern of the inhibition layer D.

In addition, even when the peeled label was superimposed at the position prior to peeling, the pattern of the inhibition layer D was readable.

As in Example 1, the easily peelable laminate film described in Production Example 1 was used, so the peeling suitability, pattern peeling suitability, and security performance of the label in the portion where the inhibition layer D was not provided were not evaluated.

Example 18

A peelable laminate label in which the base layer A/brittle layer B/visually recognizable layer C/inhibition layer D/pressure-sensitive adhesive layer E/release liner were laminated in this order was obtained in the same manner as in Production Example 1 with the exception that the pressure-sensitive adhesive layer E in Example 1 was changed to a stripe pattern having a line width of 5 mm so as to yield a surface coverage of 50%.

After the release liner of the label described above was peeled, the release liner was attached to a white PET film (Teijin$^R$ Tetoron$^R$ Film U2, manufactured by Teijin Du Pont Film Co., Ltd.) as an adherend via the pressure-sensitive adhesive layer E. When the release liner was then peeled, the shape of the location where the pressure-sensitive adhesive layer E was provided and the inhibition layer D was not provided appeared, and it was possible to easily confirm that the label had been peeled.

As in Example 1, the easily peelable laminate film described in Production Example 1 was used, so the peeling suitability, pattern peeling suitability, and security performance of the label in the portion where the inhibition layer D was not provided were not evaluated.

Example 19

A peelable laminate label in which the base layer A/brittle layer B/visually recognizable layer C/inhibition layer D/pressure-sensitive adhesive layer E/release liner were laminated in this order was obtained in the same manner as in Production Example 1 with the exception that the pressure-sensitive adhesive layer E in Example 1 was colored with a white pigment (N-DYM 8054 White, manufactured by Dainichiseika Color & Chemicals Mfg. Co., Ltd.).

After the release liner of the label described above was peeled, the release liner was attached to a blue adherend of the same color as the label via the pressure-sensitive adhesive layer E. When the release liner was then peeled, simple blue graphics and characters appeared clearly on the white pressure-sensitive adhesive layer, and the color difference of the label was accentuated by the white pressure-sensitive adhesive, which made it possible to easily confirm that the label had been peeled. Next, the label was once again superimposed at the original position of the adherend. When the superimposition information visibility after printing was evaluated, the pattern of the inhibition layer D was readable.

As in Example 1, the easily peelable laminate film described in Production Example 1 was used, so the peeling suitability, pattern peeling suitability, and security performance of the label in the portion where the inhibition layer D was not provided were not evaluated.

Production of blue adherend: A blue adherend was obtained by subjecting one side of a white PET film (Teijin[R] Tetoron[R] Film U2, manufactured by Teijin Du Pont Film Co., Ltd.) to corona discharge treatment at a printing energy density of 4200 J/m$^2$ using a corona discharge treatment device (HF400F, manufactured by Kasuga Electric Works Ltd.), printing a solid pattern on the corona treatment surface, using 1.5 g/m$^2$ of a blue UV ink (UV 161 Indigo S, manufactured by T&K TOKA Corporation), and curing the ink by UV irradiation.

Example 20

A peelable laminate film in which printing information/base layer A/brittle layer B/visually recognizable layer C/inhibition layer D/pressure-sensitive adhesive layer E/release liner were laminated in this order was obtained by printing printing information with the characters "Do Not Open" in a 40 pt. HGP Gothic E font, using 1.5 g/m$^2$ of a UV ink (UV 161 Crimson S, manufactured by T&K TOKA Corporation) so as to be in contact with the base layer A of the peelable laminate label produced in Example 1, and then curing the printing information by UV irradiation.

As in Example 1, the easily peelable laminate film described in Production Example 1 was used, so the peeling suitability, pattern peeling suitability, and security performance of the label in the portion where the inhibition layer D was not provided were not evaluated.

Example 21

Using 1.5 g/m$^2$ of a mixture containing a cation curable UV silicone resin (UV POLY200, manufactured by Arakawa Chemical Industries, Co., Ltd.) and a boron-based cation curable UV catalyst (UV CATA211, manufactured by Arakawa Chemical Industries, Co., Ltd.) with a weight ratio of 50:1 as a coating layer, a solid pattern was printed so that the coating layer was in contact with the base layer A of the peelable laminate label produced in Example 1. The peeling coating layer was then cured by UV irradiation to obtain a peelable laminate label in which the coating layer/base layer A/brittle layer B/visually recognizable layer C/inhibition layer D/pressure-sensitive adhesive layer E/release liner were laminated in this order.

After the release liner of the label described above was peeled, the release liner was wrapped around a paper tube so that the pressure-sensitive adhesive layer E and the coating layer were in contact, and a roll-shaped peelable laminate label without a release liner was thereby obtained. In addition, the roll-shaped peelable laminate label was extractable with a light force and without any sound.

As in Example 1, the easily peelable laminate film described in Production Example 1 was used, so the peeling suitability, pattern peeling suitability, and security performance of the label in the portion where the inhibition layer D was not provided were not evaluated.

Example 22

A thermosensitive color developing agent was prepared by mixing 25 parts by weight of the liquid A shown below, 180 parts by weight of the liquid B, 70 parts by weight of a 50% aqueous dispersion of talc, and 240 parts by weight of a 5% aqueous solution of hydroxyethyl cellulose as a binder.

Preparation of liquid A

3-(N-methyl-N-cyclohexylamino)-6-methyl-7-anilinofluorane: 4 parts by weight
3-Diethylamino-7-orthochloroanilinofluorane: 1 part by weight
5% aqueous solution of hydroxyethyl cellulose: 20 parts by weight

A composition of this ratio was pulverized to an average particle size of 2 μm with a sand grinder.

Preparation of liquid B

4,4'-Isopropylidenediphenol(bisphenol A): 25 parts by weight
Stearamide: 15 parts by weight
5% aqueous solution of hydroxyethyl cellulose: 140 parts by weight

A composition with this ratio was pulverized to an average particle size of 2 μm with a sand grinder.
The layer configurations of Examples 17 to 22 are shown collectively in Table 4.

Table 3

| Easily peelable laminate film | Easily peelable laminate label | Adherend with easily peelable laminate label | | | | | | | | | | | | | | |
| | Layer configuration | Portion where the inhibition layer D is not provided | | | | | rtion where the inhibition layer D is provided | | | | Security performance | | | | | |
| | | Peelability | | | | No pattern | Simple graphics | | Characters | | Information visibility prior to peeling | | Superimposition information visibility after peeling | | Information visibility after reattachment | |
| | | Stress at start of peeling (N/15mm) | Average peel force (N/15mm) | Initiation property | Propagativity | Failure location; form | Failure location; form | Sharpness | Failure location; form | Sharpness | Concentration difference ($\Delta E_X$) | Visual | Concentration difference ($\Delta E_Y$) | Visual | Concentration difference ($\Delta E_Z$) | Visual |
| Example 1 | Production Example 1 — A/B/C/D/E / release liner | 1.54 | 0.80 | Good | Good | B ; CSF | D/E interface; AF | Good | D/E interface; AF | Good | 0.0 | Good | 10.6 | Good | 25.6 | Good |
| Example 2 | Production Example 1 — A/B/C/D/E / release liner | 1.54 | 0.80 | Good | Good | B ; CSF | C/D interface; DF | Good | C/D interface; DF | Good | 0.0 | Good | 10.6 | Good | 25.6 | Good |
| Example 3 | - — A/B/C/D/E / release liner | 1.16 | 0.60 | Good | Good | B : CSF | D/C interface; DF | Good | D/C interface; DF | Good | 0.7 | Passable | 8.6 | Good | 1.7 | Passable |
| Example 4 | Production Example 2 — A/B/C/D/E / release liner | 5.02 | 2.60 | Passable | Moderate | B ; CSF | D/E interface; AF | Good | D/E interface; AF | Moderate | 0.0 | Good | 10.3 | Good | 25.6 | Good |
| Example 5 | Production Example 3 — A/B/C/D/E / release liner | 3.09 | 1.60 | Moderate | Good | B ; CSF | D/E interface; AF | Good | D/E interface; AF | Moderate | 0.0 | Good | 11.4 | Good | 26.7 | Good |
| Example 6 | Production Example 4 — A/B/C/E/E / release liner | 1.02 | 0.14 | Good | Good | B ; CSF | D/E interface; AF | Good | D/E interface; AF | Good | 0.0 | Good | 3.8 | Moderate | 40.3 | Good |

EP 3 333 834 A1

| Easily peelable laminate film | Easily peelable laminate label | | Adherend with easily peelable laminate label | | | | | | | | | | | | | | |
| | | Layer configuration | Portion where the inhibition layer D is not provided | | | | | rtion where the inhibition layer D is provided | | | | Security performance | | | | | |
| | | | Peelability | | | | No pattern | Simple graphics | | Characters | | Information visibility prior to peeling | | Superimposition information visibility after peeling | | Information visibility after reattachment | |
| | | | Stress at start of peeling (N/15 mm) | Average peel force (N/15mm) | Initiation property | Propagativity | Failure location; form | Failure location; form | Sharpness | Failure location; form | Sharpness | Concentration difference ($\Delta E_X$) | Visual | Concentration difference ($\Delta E_Y$) | Visual | Concentration difference ($\Delta E_Z$) | Visual |
| Example 7 | Production Example 5 | A/B/C/D/E / release liner | 1.16 | 0.60 | Good | Good | B ; CSF | D/E interface; AF | Good | D/E interface; AF | Good | 0.0 | Good | 2.7 | Passable | 19.7 | Good |
| Example 8 | Production Example 6 | A/B/C/D/E / release liner | 2.32 | 1.20 | Good | Good | B ; CSF | D/E interface; AF | Good | D/E interface; AF | Good | 0.0 | Good | 11.6 | Good | 47.5 | Good |
| Example 9 | Production Example 7 | A/B/C/D/E ' release liner | 1.70 | 0.88 | Good | Good | B ; CSF | D/E interface; AF | Good | D/E interface; AF | Good | 0.0 | Good | 3.0 | Passable | 29.8 | Good |
| Example 10 | Production Example 8 | A/B/C/D/E / release liner | 1.54 | 0.80 | Good | Good | B ; CSF | D/E interface; AF | Good | D/E interface; AF | Good | 0.0 | Good | 6.9 | Good | 16.1 | Good |
| Example 11 | Production Example? | A/B/C/D/E / release liner | 1.83 | 0.95 | Good | Good | B ; CSF | D/E interface; AF | Good | D/E interface; AF | Good | 0.0 | Good | 5.2 | Moderate | 49.1 | Good |

44

| Easily peelable laminate film | Easily peelable laminate label | Adherend with easily peelable laminate label | | | | | | | | | | | | | | | |
| | Layer configuration | Portion where the inhibition layer D is not provided | | | | | rtion where the inhibition layer D is provided | | | | | Security performance | | | | | |
| | | Peelability | | | | No pattern | Simple graphics | | Characters | | Information visibility prior to peeling | | Superimposition information visibility after peeling | | Information visibility after reattachment | | |
| | | Stress at start of peeling (N/15 mm) | Average peel force (N/15mm) | Initiation property | Propagativity | Failure location; form | Failure location; form | Sharpness | Failure location; form | Sharpness | Concentration difference ($\Delta E_X$) | Visual | Concentration difference ($\Delta E_Y$) | Visual | Concentration difference ($\Delta E_Z$) | Visual |
| Example 12 | Production Example 10 | A/B/C/D/E / release liner | 1.54 | 0.80 | Good | Good | B ; CSF | D/E interface; AF | Good | D/E interface; AF | Good | - | - | - | - | - | - |
| Example 13 | Production Example 11 | A/B/C/D/E / release liner | 1.54 | 0.80 | Good | Good | B ; CSF | D/E interface; AF | Good | D/E interface; AF | Good | 0.0 | Good | 9.5 | Good | 21.5 | Good |
| Example 14 | Production Example 12 | A/B/C/D/E / release liner | 1.54 | 0.80 | Good | Good | B ; CSF | D/E interface; AF | Good | D/E interface; AF | Good | - | - | - | - | - | - |
| Example 15 | Production Example 13 | A/B/C/D/E / release liner | 1.75 | 0.92 | Good | Good | B ; CSF | D/E interface; AF | Good | D/E interface; AF | Good | 0.0 | Good | 4.3 | Moderate | 8.7 | Good |
| Example 16 | Production Example 14 | A/B/C/D/E / release li.'' | 1.54 | 0.80 | Good | Good | B ; CSF | D/E interface, AF | Good | D/E interface; AF | Good | 0.0 | Good | 2.7 | Passable | 8.8 | Good |

| | Easily peelable laminate film | | Easily peelable laminate label | | | | | | | | | | | | | | | | |
| | | | | Adherend with easily peelable laminate label | | | | | | | | | | | | | | | |
| | | | | Portion where the inhibition layer D is not provided | | | | | rtion where the inhibition layer D is provided | | | | Security performance | | | | | | |
| | | Layer configuration | | Peelability | | | | No pattern | Simple graphics | | Characters | | Information visibility prior to peeling | | Superimposition information visibility after peeling | | Information visibility after reattachment | |
| | | | | Stress at start of peeling (N/15 mm) | Average peel force (N/15mm) | Initiation property | Propagativity | Failure location; form | Failure location; form | Sharpness | Failure location; form | Sharpness | Concentration difference ($\Delta E_X$) | Visual | Concentration difference ($\Delta E_Y$) | Visual | Concentration difference ($\Delta E_Z$) | Visual |
| Comparative example | Production Example 1 | A/B/C/D/E / release liner | | 1.54 | 0.80 | Good | Good | B ; CSF | D/E interface; AF | Passable | B ; CSF | Poor | 0.0 | Good | 8.4 | Good | 19.0 | Good |
| Comparative Example 2 | Production Example 15 | A/B/C/D/E / release liner | | 9.46 | 4.90 | Poor | Poor | E/adherend surface; AF | D/E interface; AF | Poor | D/E interface; AF | Poor | - | - | - | - | - | - |
| Comparative Example 4 | Production Example 17 | A/B/C/D/E / release liner | | 1.54 | 0.80 | Good | Good | B ; CSF | B ; CSF | Poor | B ; CSF | Poor | - | - | - | - | - | - |
| Comparative Example 5 | Production Example 18 | A/B/C/D/E / release liner | | 9.46 | 4.90 | Poor | Poor | E/adherend surface; AF | D/E interface; AF | Poor | D/E interface; AF | Poor | - | - | - | - | - | - |

Table 4

| | Easily peelable laminate film | Easily peelable laminate label |
|---|---|---|
| | | Layer configuration |
| Example 17 | Production Example 1 | A/B/C (character pattern)/D/E/release liner |
| Example 18 | Production Example 1 | A/B/C/D/E (surface coverage: 50%)/release liner |
| Example 19 | Production Example 1 | A/B/C/D/E (coloration)/release liner |
| Example 20 | Production Example 1 | Printing information/A/B/C/D/E/release liner |
| Example 21 | Production Example 1 | Coating layer/A/B/C/D/E |
| Example 22 | Production Example 1 | Coating layer/A/B/C/D/E/release liner |

A peelable laminate label in which a coating layer/base layer A/brittle layer B/visually recognizable layer C/inhibition layer D/pressure-sensitive adhesive layer E/release liner were laminated in this order was obtained by applying a thermosensitive color developing agent as a coating layer using a bar coater in a dried coating amount of 5.5 g/m$^2$ so as to be in contact with the base layer A of the peelable laminate label produced in Example 1.

The peelable laminate label described above was subjected to printing using a bar code printer (B-30-5, manufactured by Tec Co., Ltd.), and this was used for the evaluation of heat printing suitability. The evaluation of heat printing suitability was made by printing a bar code (CODE 39) on the surface of the coating layer of the peelable laminate label using a bar code verifier (LASERCHEK II, manufactured by Fuji Electric Refrigerator Co., Ltd.). An evaluation of grade A was given when the ANSI GRADE of the bar code was measured after printing using the verifier, and a distinct image was printed.

As shown in Table 3, each example, which is an easily peelable laminate label including the base layer A, the brittle layer B, the visually recognizable layer C, the inhibition layer D, and the pressure-sensitive adhesive layer E, wherein the brittle layer B, the visually recognizable layer C, and the inhibition layer D are in contact in this order and the inhibition layer D is provided in a discontinuous manner, and the form of failure is delamination (DF) on the surface in contact with the inhibition layer D and/or adhesive failure (AF) in the portion where the inhibition layer D is provided and cohesive failure (CSF) of the brittle layer B in the portion where the inhibition layer D is not provided, demonstrates good security. In addition, the pattern at the time of peeling is sharp. The labels of these examples have a mechanism in which the visually recognizable layer C is cut so as to be aligned with the pattern of the inhibition layer D.

On the other hand, the label of Comparative Example 1 differs from each of the examples in that the brittle layer B, the visually recognizable layer C, and the inhibition layer D are not in contact in this order, and the label has a mechanism for cutting the pressure-sensitive adhesive, which yields poor pattern sharpness. In addition, the labels of Comparative Examples 2 to 5 are examples of designs in which the strength of each layer is inappropriate, wherein the failure form does not satisfy the technical scope of the present invention while the brittle layer B, the visually recognizable layer C, and the inhibition layer D are not in contact in this order. As a result, the patters are not expressed whatsoever, and it can be seen that no security is expressed whatsoever.

In addition, Example 17 is an example in which the visually recognizable layer C is formed by pattern printing; Example 18 is an example in which the pressure-sensitive adhesive layer E is provided in a striped manner without being colored; Example 19 is an example in which the visually recognizable layer C is colored white; Example 20 is an example in which unchanging printing information is provided to the label side separately from the visually recognizable layer C; Example 21 is an example in which peeling suitability is imparted to the label surface so as to eliminate the need for a release liner; and Example 22 is an example in which a thermosensitive recording layer is provided on the label side to enable thermosensitive recording. However, the present invention is not limited to these examples, and it goes without saying that various variations can be employed.

Industrial Applicability

The easily peelable laminate label of the present invention can be effectively used in a wide range of applications such as labels for replacement prevention, falsification prevention seals, shipping slips, subscription seals, and coupons because a pattern does not appear prior to peeling in the adherend to which the label is attached, whereas a pattern appears in response to peeling, and the pattern does not disappear even if the label is reattached.

Reference Signs List

1 Base layer A
2 Brittle layer B
3 Visually recognizable layer C
4 Inhibition layer D
5 Pressure-sensitive adhesive layer E
10 Easily peelable laminate film
20 Release liner
30 Adherend
100a, 100b Easily peelable laminate labels

**Claims**

1. An easily peelable laminate label comprising
a base layer A, a brittle layer B, a visually recognizable layer C, an inhibition layer D, and a pressure-sensitive adhesive layer E;
the brittle layer B, the visually recognizable layer C, and the inhibition layer D being laminated in this order between the base layer A and the pressure-sensitive adhesive layer E;
the brittle layer B and the visually recognizable layer C being in contact with each other;
the visually recognizable layer C and the inhibition layer D being in contact with each other; the inhibition layer D being disposed in a discontinuous pattern; and
a form of failure according to JIS K6866:1999 when the easily peelable laminate label is subjected to 180° peeling in accordance with JIS K6854-2:1999 being delamination (DF) and/or adhesive failure (AF) at an interface between the inhibition layer D and the layer in contact with the inhibition layer D in a portion where the inhibition layer D is provided and cohesive failure (CSF) of the brittle layer B in a portion where the inhibition layer D is not provided.

2. The easily peelable laminate label according to claim 1, wherein the base layer A, the brittle layer B, the visually recognizable layer C, the inhibition layer D, and the pressure-sensitive adhesive layer E are laminated in this order.

3. The easily peelable laminate label according to claim 2, wherein the inhibition layer D and the pressure-sensitive adhesive layer E are in contact with each other, and an interface where delamination (DF) and/or adhesive failure (AF) occurs is an interface between the inhibition layer D and the pressure-sensitive adhesive layer E in the portion where the inhibition layer D is provided.

4. The easily peelable laminate label according to claim 1, wherein the base layer A, the inhibition layer D, the visually recognizable layer C, the brittle layer B, and the pressure-sensitive adhesive layer E are laminated in this order.

5. The easily peelable laminate label according to claim 4, wherein an interface where delamination (DF) and/or adhesive failure (AF) occurs is an interface between the inhibition layer D and the visually recognizable layer C in the portion where the inhibition layer D is provided.

6. The easily peelable laminate label according to any one of claims 1 to 5, wherein when the easily peelable laminate label is subjected to 180° peeling in accordance with JIS K6854-2:1999, an average peel force in the portion where the inhibition layer D is not provided is from 0.1 to 4.0 N/15 mm.

7. The easily peelable laminate label according to any one of claims 1 to 6, wherein the brittle layer B contains a thermoplastic resin and has a nonuniform structure; and the nonuniform structure is formed by allowing at least one type of material selected from inorganic fine powders, organic fillers, air bubbles, and other thermoplastic resins incompatible with the thermoplastic resin to coexist with the thermoplastic resin.

8. The easily peelable laminate label according to any one of claims 1 to 7, wherein the brittle layer B contains from 22 to 99.9 mass% of a thermoplastic resin, from 0 to 78 mass% of at least one of an inorganic fine powder and an organic filler, and from 0.1 to 10 mass% of a dispersant, and a total of the thermoplastic resin, the inorganic fine powder and/or the organic filler, and the dispersant is 100 mass%.

9. The easily peelable laminate label according to any one of claims 1 to 8, wherein the brittle layer B is stretched in at least one axial direction.

10. The easily peelable laminate label according to any one of claims 1 to 9, wherein a thickness of the brittle layer B is from 0.1 to 13 $\mu$m.

11. The easily peelable laminate label according to any one of claims 1 to 10, wherein the base layer A contains from 40 to 100 mass% of a thermoplastic resin and from 0 to 60 mass% of at least one of an inorganic fine powder and an organic filler.

12. The easily peelable laminate label according to any one of claims 1 to 11, wherein the label has an easily peelable laminate film composed of the base layer A and the brittle layer B, and an opacity of the easily peelable laminate film defined by JIS P8149:2000 is not greater than 70%.

13. The easily peelable laminate label according to any one of claims 1 to 12, wherein the visually recognizable layer C includes at least one type of a printing pattern selected from designs, characters, symbols, background pattern, dots, geometric patterns, random patterns, and solid patterns.

14. The easily peelable laminate label according to any one of claims 1 to 13, wherein the visually recognizable layer C is a solid printing pattern provided such that the surface of the brittle layer B is covered.

15. The easily peelable laminate label according to any one of claims 1 to 14, wherein the inhibition layer D includes at least one type of printing pattern selected from designs, characters, symbols, dots, geometric patterns, and random patterns.

16. The easily peelable laminate label according to any one of claims 1 to 15, wherein the pressure-sensitive adhesive layer E has a pattern structure.

17. The easily peelable laminate label according to any one of claims 1 to 16, wherein the pressure-sensitive adhesive layer E contains a colorant.

18. The easily peelable laminate label according to any one of claims 1 to 17, wherein printing information or decoration information is provided on a surface of the base layer A opposite to a surface near the brittle layer B.

19. The easily peelable laminate label according to any one of claims 1 to 18, wherein a coating layer is provided on a surface of the base layer A opposite to a surface near the brittle layer B, and the coating layer contains any one of a release agent, a thermosensitive color developing agent, or an ink fixative.

20. The easily peelable laminate label according to any one of claims 1 to 19, wherein,
when an L-value, an a-value, and a b-value are measured under conditions with a light source of D50 and a viewing angle of 2° using a spectrophotometer in a state in which the easily peelable laminate label is attached to the adherend surface,
an information visibility prior to peeling ($\Delta E_X$) expressed by the following equation is not greater than 0.4;
a superimposition information visibility ($\Delta E_Y$) is not less than 3.2; and
an information visibility after reattachment ($\Delta E_Z$) is not less than 3.2;
the information visibility prior to peeling ($\Delta E_X$) is color difference between the portion in which the inhibition layer D is provided (X1) and the portion in which the inhibition layer D is not provided (X2) in a state prior to peeling:

[Equation 1]

$$\Delta E_X = \sqrt{(L_{X1} - L_{X2})^2 + (a_{X1} - a_{X2})^2 + (b_{X1} - b_{X2})^2}$$

where, $L_{X1}$ is the L-value measured in the portion where the inhibition layer D is provided (X1); $L_{X2}$ is the L-value measured in the portion where the inhibition layer D is not provided (X2); $a_{X1}$ is the a-value measured in the portion where the inhibition layer D is provided (X1); $a_{X2}$ is the a-value measured in the portion where the inhibition layer D is not provided (X2); $b_{X1}$ is the b-value of the portion where the inhibition layer D is provided (X1); and $b_{X2}$ is the b-value of the portion where the inhibition layer D is not provided (X2);

the superimposition information visibility after peeling ($\Delta E_Y$) is color difference between the portion where the inhibition layer D is provided (Y1) and the portion where the inhibition layer D is not provided (Y2) in a state in which, after the label is peeled and separated into the base layer A side and the adherend side, both sides are superimposed at the original position without anything in between:

[Equation 2]

$$\Delta E_Y = \sqrt{(L_{Y1} - L_{Y2})^2 + (a_{Y1} - a_{Y2})^2 + (b_{Y1} - b_{Y2})^2}$$

where, $L_{Y1}$ is the L-value measured in the portion where the inhibition layer D is provided (Y1); $L_{Y2}$ is the L-value measured in the portion where the inhibition layer D is not provided (Y2); $a_{Y1}$ is the a-value measured in the portion where the inhibition layer D is provided (Y1); $a_{Y2}$ is the a-value measured in the portion where the inhibition layer D is not provided (Y2); $b_{Y1}$ is the b-value of the portion where the inhibition layer D is provided (Y1); and $b_{Y2}$ is the b-value of the portion where the inhibition layer D is not provided (Y2); and

the information visibility after reattachment ($\Delta E_Z$) is color difference between the portion where the inhibition layer D is provided (Z1) and the portion where the inhibition layer D is not provided (Z2) in a state in which, after the label is peeled and separated into the base layer A side and the adherend side, both sides are superimposed at the original position with an adhesive agent or a pressure-sensitive adhesive interposed therebetween:

[Equation 3]

$$\Delta E_Z = \sqrt{(L_{Z1} - L_{Z2})^2 + (a_{Z1} - a_{Z2})^2 + (b_{Z1} - b_{Z2})^2}$$

where, $L_{Z1}$ is the L-value measured in the portion where the inhibition layer D is provided (Z1); $L_{Z2}$ is the L-value measured in the portion where the inhibition layer D is not provided (Z2); $a_{Z1}$ is the a-value measured in the portion where the inhibition layer D is provided (Z1); $a_{Z2}$ is the a-value measured in the portion where the inhibition layer D is not provided (Z2); $b_{Z1}$ is the b-value of the portion where the inhibition layer D is provided (Z1); and $b_{Z2}$ is the b-value of the portion where the inhibition layer D is not provided (Z2).

21. A production method for an easily peelable laminate film comprising:

producing an easily peelable laminate film by laminating a base layer A and a brittle layer B;
providing a visually recognizable layer C on a brittle layer B side surface of the easily peelable laminate film;
laminating the visually recognizable layer C and an inhibition layer D such that both are in contact with each other; and
laminating the inhibition layer D and a pressure-sensitive adhesive layer E such that both are in contact with each other.

22. A production method for an easily peelable laminate film comprising:

providing an inhibition layer D on a surface of a base layer A;
laminating the inhibition layer D and a visually recognizable layer C such that both are in contact with each other;
laminating the visually recognizable layer C and a brittle layer B such that both are in contact with each other; and
laminating the brittle layer B and a pressure-sensitive adhesive layer E such that both are in contact with each other.

23. An adherend with an easily peelable laminate label comprising an adherend and an easily peelable laminate label attached to at least a portion of a surface of the adherend; the easily peelable laminate label being the easily peelable laminate label according to any one of claims 1 to 20.

24. A usage method for an easily peelable laminate label, the method comprising using the easily peelable laminate label according to any one of claims 1 to 20 such that, when the label is peeled after being attached to an adherend, one or more patterns from among designs, characters, symbols, dots, geometric patterns, and random patterns appear in a portion from which the label is peeled from the adherend, and an inverted pattern of the pattern simultaneously appears in a portion remaining on the adherend.

25. A usage method for an easily peelable laminate label, the method comprising using the easily peelable laminate label according to any one of claims 1 to 20 such that, when the label is peeled after being attached to an adherend, a form of failure according to JIS K6866:1999 is delamination (DF) and/or adhesive failure (AF) at an interface between an inhibition layer D and a layer in contact with the inhibition layer D in a portion where the inhibition layer D is provided and cohesive failure (CSF) of the brittle layer B in a portion where the inhibition layer D is not provided.

26. A usage method for an easily peelable laminate label, the method comprising using the easily peelable laminate label according to any one of claims 1 to 20 such that, when the easily peelable laminate label of the present invention is peeled from an adherend to which the easily peelable laminate label is attached, and a portion peeled from the adherend is reattached to a site of the adherend from which the label has been peeled by a pressure-sensitive adhesive or an adhesive agent, at least one type of pattern selected from designs, characters, symbols, dots, geometric patterns, and random patterns appears on the adherend side.

27. An opening determination method comprising attaching the easily peelable laminate label according to any one of claims 1 to 20 to an openable location of an adherend, assessing as "unopened" a state in which a pattern does not appear on a base layer A side of the easily peelable laminate label, and assessing as "opened" a state in which at least one type of pattern selected from designs, characters, symbols, dots, geometric patterns, and random patterns appears on the base layer A side.

Fig. 1

Fig. 2

Fig. 3

Fig. 4

Fig. 5

Fig. 6

**INTERNATIONAL SEARCH REPORT**

| International application No. |
|---|
| PCT/JP2016/071686 |

A. CLASSIFICATION OF SUBJECT MATTER
*G09F3/03*(2006.01)i, *B31D1/02*(2006.01)i

According to International Patent Classification (IPC) or to both national classification and IPC

B. FIELDS SEARCHED

Minimum documentation searched (classification system followed by classification symbols)
G09F3/00-3/20, B31D1/02

Documentation searched other than minimum documentation to the extent that such documents are included in the fields searched
Jitsuyo Shinan Koho        1922-1996    Jitsuyo Shinan Toroku Koho    1996-2016
Kokai Jitsuyo Shinan Koho  1971-2016    Toroku Jitsuyo Shinan Koho    1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 61-102685 A (Fuji Seal Industry Co., Ltd.), 21 May 1986 (21.05.1986), page 4, upper left column, line 18 to lower left column, line 15; fig. 7 to 8 (Family: none) | 1-27 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 September 2016 (06.09.16) | 20 September 2016 (20.09.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/071686

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-502745 A  (Minnesota Mining and Manufacturing Co.), 10 March 1998 (10.03.1998), page 15, line 18 to page 17, line 13; fig. 3 to 8 & WO 96/002048 A1 page 12, line 13 to page 14, line 15; fig. 3 to 8 & US 5629093 A          & EP 770251 A & DE 69504082 C         & AU 2952595 A1 & BR 9508256 A          & HK 1013877 A & CA 2194454 A | 1-27 |
| A | JP 11-52864 A  (Kyowa Tokushu Insatsu Kabushiki Kaisha), 26 February 1999 (26.02.1999), paragraphs [0045] to [0047]; fig. 9 to 10 (Family: none) | 1-27 |
| A | US 4121003 A  (WILLIAMS, Frederick P.), 17 October 1978 (17.10.1978), column 4, lines 11 to 20; fig. 4 to 4A (Family: none) | 1-27 |
| A | WO 2015/030172 A1  (Yupo Corp.), 05 March 2015 (05.03.2015), entire text; all drawings & US 2016/0200072 A1 entire text; all drawings & JP 2015-63125 A        & EP 3040197 A & CN 105492202 A | 1-27 |

Form PCT/ISA/210 (continuation of second sheet) (January 2015)

56

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 52106466 Y
- JP 2002072889 A
- JP 2007178558 A
- JP 10222075 A
- JP 2002205472 A
- JP 3243677 A
- JP 11323790 A